# EUROPEAN PATENT SPECIFICATION

(11) **EP 4 548 821 B1**
(45) Date of publication and mention of the grant of the patent: **13.05.2026**
(21) Application number: 24191364.9
(22) Date of filing: 29.07.2024
(51) Int. Cl.: A47J 37/06

(54) **COOKING DEVICE**
GARGERÄT
APPAREIL DE CUISSON

(30) Priority: 30.10.2023 CN 202311427642
(43) Date of publication of application: 07.05.2025
(73) Proprietor: Foshan Shunde Midea Electrical Heating Appliances Manufacturing Co., Ltd., Foshan, Guangdong 528311 (CN)
(72) Inventor: LI, Yong, Foshan (CN); CHENG, Zhixi, Foshan (CN); ZHANG, Jianhua, Foshan (CN)
(74) Representative: Ran, Handong

(56) References cited:
- CN-A- 114 916 841
- CN-A- 115 486 725
- CN-U- 215 687 047
- CN-U- 217 713 096
- CN-U- 218 870 075
- US-A- 3 691 938
- US-A1- 2005 223 906

## Description

### TECHNICAL FIELD

The present application relates to the technical field of electrical appliances, in particular to a cooking device.

### BACKGROUND

In recent years, with the development of the technical field of electrical appliances, cooking device has appeared more and more in people's lives. As a kind of cooking appliance, cooking device can cook, bake food, etc., to meet people's food processing needs.

However, the oil fume generated when the existing cooking device is working is easy to adhere to heating elements and other devices, making it difficult to clean the cooking device. CN218870075U relates generally to an air fryer. CN215687047U relates generally to an air fryer that is easy for users to clean. US2005223906A1 relates generally to a stir-frying apparatus with an overhead-heating device. US3691938A relates generally to a cooking apparatus which is essentially free of any manual operation or attention during the cooking period. CN217713096U relates generally to a fan mounting seat, a fan assembly and an air fryer.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. An embodiment of the present application provides a cooking device to improve at least one of the above technical problems.

The embodiments of the present application achieve the above objects through the following technical solutions.

The embodiment of the present application provides a cooking device. The cooking device includes a pot body, a heating element and a panel. The pot body is provided with a cooking cavity and an installation cavity. The heating element is located in the installation cavity. The panel is assembled on the pot body and separates the cooking cavity and the installation cavity.

The cooking device provided by the embodiment of the present application includes a pot body, a heating element and a panel. The pot body is provided with a cooking cavity and an installation cavity. The heating element is located in the installation cavity. The panel is assembled on the pot body and separates the cooking cavity and the installation cavity. In this way, the panel separates the cooking cavity and the installation cavity so that the panel can separate the cooking cavity and the heating element, which helps to prevent the oil smoke in the cooking cavity from adhering to the heating element and prevent the attached oil smoke from affecting the normal operation of the heating element. In addition, the panel separating the cooking cavity and the installation cavity also helps to reduce the structure of the cooking device that needs to be cleaned, and helps to facilitate the cleaning of the cooking device.

### BRIEF DESCRIPTION OF THE DRAWINGS

In order to more clearly illustrate the technical solutions in the embodiments of the present application, the drawings needed to be used in the description of the embodiments will be briefly introduced below. Obviously, the drawings in the following description are only some embodiments of the present application. For those skilled in the art, other drawings can also be obtained based on these drawings without exerting creative efforts.
FIG. 1 shows a schematic structural view of a cooking device according to an embodiment of the present application.
FIG. 2 shows a schematic longitudinal cross-sectional view of the cooking device of FIG. 1.
FIG. 3 shows a schematic longitudinal cross-sectional view of part of a structure of the cooking device of FIG. 1.
FIG. 4 shows a schematic structural view of a bracket, a panel and a perspective plate of the cooking device of FIG. 1.
FIG. 5 shows an enlarged structural schematic view of the cooking device of FIG. 3 at position A.
FIG. 6 shows an enlarged structural schematic view of the cooking device of FIG. 3 at position B.
FIG. 7 shows a schematic longitudinal cross-section view of the cooking device of FIG. 1 from another perspective.
FIG. 8 shows a schematic structural view of an exhaust part in FIG. 7.
FIG. 9 shows a schematic cross-sectional view of the exhaust part in FIG. 8.
FIG. 10 shows a schematic cross-sectional view of the exhaust part in FIG. 8 from another perspective.
FIG. 11 shows a schematic structural view of the exhaust part according to another embodiment of the present application.
FIG. 12 shows a schematic cross-sectional view of the exhaust part in FIG. 11.
FIG. 13 shows a schematic cross-sectional view of the exhaust part in FIG. 11 from another perspective.
FIG. 14 shows a schematic structural view of the exhaust part according to another embodiment of the present application.
FIG. 15 shows a schematic cross-sectional view of the exhaust part of FIG. 14.
FIG. 16 shows a schematic cross-sectional view of the exhaust part in FIG. 14 from another perspective.
FIG. 17 shows a schematic structural view of the exhaust part according to another embodiment of the present application.
FIG. 18 shows a schematic cross-sectional view of the exhaust part of FIG. 16.
FIG. 19 shows a schematic cross-sectional view of the exhaust part in FIG. 17 from another perspective.
FIG. 20 shows a schematic structural view of a reflective cover of the cooking device of FIG. 1.
FIG. 21 shows an enlarged structural schematic view of the cooking device of FIG. 2 at position C.
FIG. 22 shows a schematic longitudinal cross-sectional view of the reflective cover of FIG. 20.
FIG. 23 shows a schematic longitudinal cross-sectional view of the reflective cover of the cooking device according to another embodiment of the present application.
FIG. 24 shows a partial cross-sectional schematic view of the cooking device of FIG. 1.
FIG. 25 shows a schematic exploded view of the heat insulation assembly of the cooking device of FIG. 24.
FIG. 26 shows an enlarged structural schematic view of the cooking device of FIG. 24 at position D.
FIG. 27 shows a partial cross-sectional schematic view of part of the structure of the cooking device of FIG. 23 from another perspective.
FIG. 28 shows an enlarged structural schematic view of the partial structure of the cooking device of FIG. 27 at position E.
FIG. 29 shows a schematic structural view of a volute of the cooking device of FIG. 1.
FIG. 30 shows a schematic structural view of a heat shield of the cooking device of FIG. 1.
FIG. 31 shows a schematic structural view of the reflective cover of the cooking device of FIG. 1.
FIG. 32 shows another partial cross-sectional schematic view of the cooking device of FIG. 1.
FIG. 33 shows a schematic structural view of the volute of the cooking device of FIG. 30.
FIG. 34 shows a schematic structural view of the bracket, the panel, the perspective plate, the closed member and the pressure ring of the cooking device of FIG. 30.
FIG. 35 shows a partial cross-sectional schematic view of the cooking device of FIG. 1 from another perspective.
FIG. 36 shows a schematic cross-sectional view of the cooking device of FIG. 1 from another perspective.
FIG. 37 shows a schematic structural view of a motor and a fan assembly of the cooking device of FIG. 1.
FIG. 38 shows a schematic cross-sectional view of the motor and fan assembly of FIG. 37.
FIG. 39 shows a schematic structural view of a fan blade of the fan assembly in FIG. 37.
FIG. 40 shows a schematic cross-sectional view of a connection sleeve of the fan assembly of FIG. 37 in a locking position.
FIG. 41 shows a schematic cross-sectional view of the connection sleeve of the fan assembly of FIG. 37 in an unlocking position.
FIG. 42 shows a schematic cross-sectional view of the fan assembly of FIG. 41 separated from the drive shaft of the motor.
FIG. 43 shows a schematic cross-sectional view of the connection sleeve of the cooking device in the locking position according to another embodiment of the present application.
FIG. 44 shows a schematic cross-sectional view of the connection sleeve of the cooking device in the unlocking position according to another embodiment of the present application.
FIG. 45 shows a schematic structural view of a first positional relationship between the fan blade and an inner pot of FIG. 7.
FIG. 46 shows a schematic structural view of a second positional relationship between the fan blade and the inner pot of FIG. 7.
FIG. 47 shows an enlarged structural schematic view of the cooking device of FIG. 7 at position F.

### DETAILED DESCRIPTION OF THE EMBODIMENTS

In order to enable those skilled in the art to better understand the solutions of the present application, the technical solutions in the embodiments of the present application will be clearly and completely described below in conjunction with the accompanying drawings in the embodiments of the present application. Obviously, the described embodiments are only some of the embodiments of the present application, but not all of the embodiments. Based on the embodiments of the present application, all other embodiments obtained by those skilled in the art without creative efforts shall fall within the scope of protection of the present application.

The technical solutions in the embodiments of the present application will be clearly and completely described below with reference to the accompanying drawings in the embodiments of the present application.

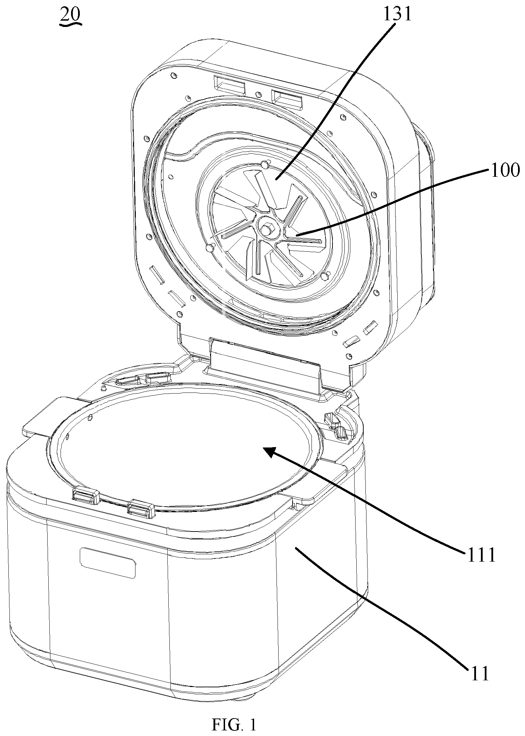

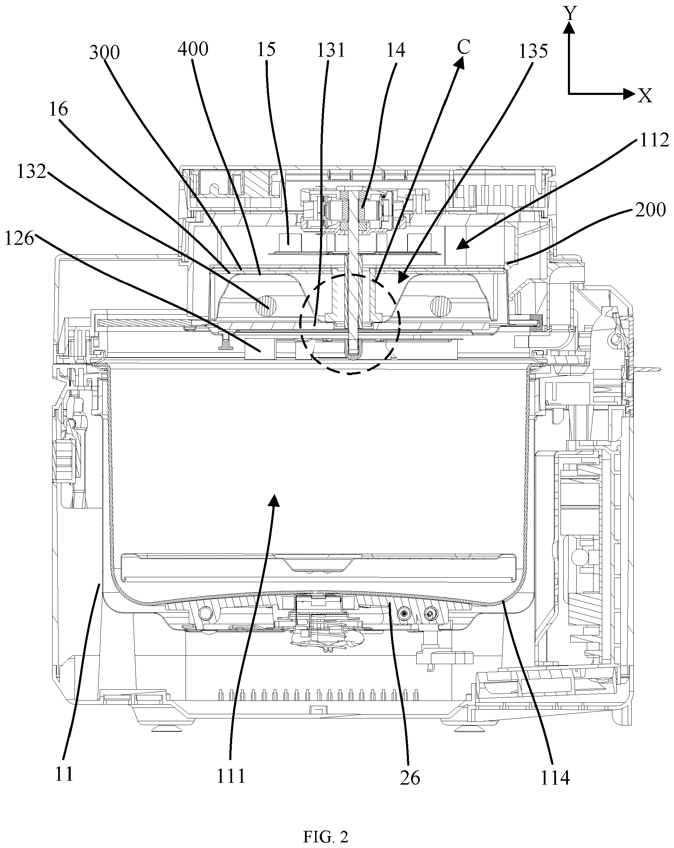

Referring to FIGS. 1 and 2, an embodiment of the present application provides a cooking device 20. The cooking device 20 is a cooking appliance that uses hot air to heat food. The cooking device 20 may be an air oven, an all-in-one frying and baking machine, or other equipment. The cooking device 20 may be a flip-top cooking device, an open-top cooking device, a drawer-type cooking device, or the like.

The cooking device 20 includes a pot body 11, a heating element 132 and a panel 131. The pot body 11 is provided with a cooking cavity 111 and an installation cavity 112. The cooking cavity 111 can be used to accommodate food, and the heating element 132 can heat the food in the cooking cavity 111. Furthermore, the cooking device 20 is provided with a cooking exhaust channel 201 and a first heat dissipation channel 202 independent of the cooking exhaust channel 201; the cooking exhaust channel 201 is provided with a cooking air inlet 201a and a cooking exhaust port 201b, and the cooking air inlet 201a is connected to the cooking cavity 111; the first heat dissipation channel 202 is provided with a first heat dissipation air inlet 202a and a first heat dissipation exhaust port 202b; and the first heat dissipation air inlet 202 is connected to the installation cavity 112, and the first heat dissipation exhaust port 202b is not connected to the cooking exhaust port 201b; characterised in that the cooking device further comprises a motor 14, a heat shield 300, and a reflective cover 400, the motor 14 is installed in the installation cavity 112, the reflective cover 400 and the heat shield 300 are enclosed to form a heat insulation space 104, the reflective cover 400 is located between the installation cavity 112 and the heat insulation space 104, the heat shield 300 is located between the heat insulation space 104 and the cooking cavity 111, the heating element 132 is located on a side of the heat shield 300 away from the heat insulation space 104 and opposite to the cooking cavity 111; and the cooking device 20 is provided with a second heat dissipation channel 203, the second heat dissipation channel 203 and the cooking exhaust channel 201 are independent of each other, the second heat dissipation channel 203 is provided with a second heat dissipation air inlet 203a and a second heat dissipation exhaust port 203b, the second heat dissipation air inlet 203a is connected to the heat insulation space 104, and the second heat dissipation exhaust port 203b is not connected to the cooking exhaust port 201b.

The heating element 132 is located in the installation cavity 112, and the panel 131 is assembled on the pot body 11 and separates the cooking cavity 111 and the installation cavity 112. The panel 131 separates the cooking cavity 111 and the installation cavity 112 so that the panel 131 can separate the cooking cavity 111 and the heating element 132. Then the oil fume splashed when the cooking device 20 is working can adhere to the side of the panel 131 away from the heating element 132, which is helpful to prevent the oil fume in the cooking cavity 111 from adhering to the heating element 132 and prevent the attached oil fume from affecting the normal operation of the heating element 132. When the cooking device 20 needs to be cleaned, the surface of the panel 131 facing the cooking cavity 111 can be cleaned directly, or the panel 131 can be directly disassembled from the pot body 11 for cleaning, which helps to reduce the structure of the cooking device 20 that needs to be cleaned, and helps to facilitate the cleaning of the cooking device 20.

In some embodiments, the cooking device 20 may further include a heating element 26, which may be a heating wire. The heating element 26 is assembled on a side of the pot body 11 away from the heating element 132. For example, the pot body 11 may include an inner pot 114, and the inner pot 114 is provided with a cooking cavity 111. The heating element 26 may be assembled on the side of the inner pot 114 away from the opening of the cooking cavity 111. At this time, the heating element 26 is opposite to the bottom of the inner pot 114. Then the heating element 26 can work with the heating element 132 to heat the food in the cooking cavity 111, which helps to ensure that the cooking device 20 works more efficiently.

In some embodiments, the heating element 26 can also be a cast aluminum heating plate, and the radius of its upper surface can be 500 mm to 1000 mm. The curvature of the bottom of the inner pot 114 is smaller than the curvature of the surface of the heating element 26, which helps to increase the heating efficiency of the heating element 26. For example, the upper surface radius of the heating element 26 can be 500mm, 600mm, 650mm, 700mm, 750mm, 800mm, 850mm, 900mm, 1000mm or any value between the two adjacent values mentioned above. In this way, the upper surface of the heating element 26 has a suitable radius, which helps to increase the contact area between the heating element 26 and the bottom of the inner pot 114, and helps to improve the heating efficiency of the heating element 26.

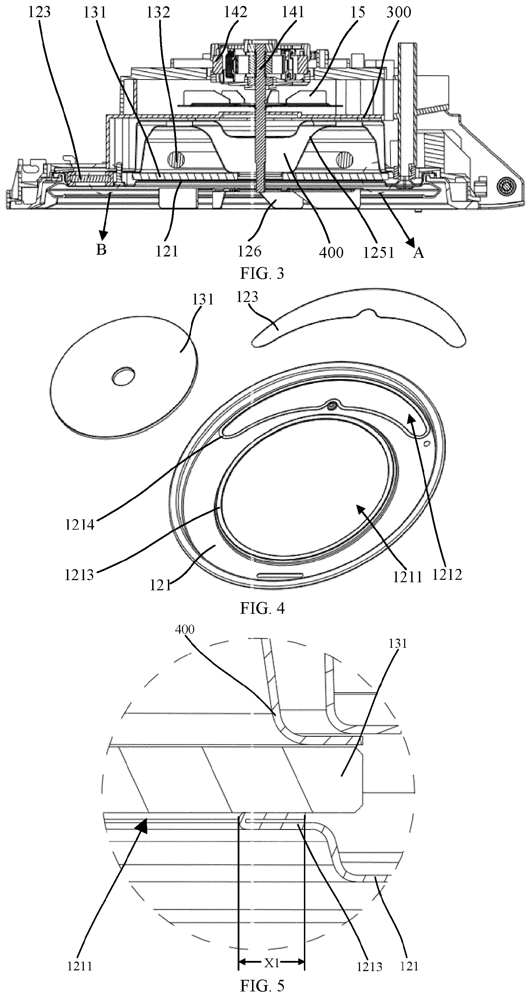

Please refer to FIGS. 2 and 3 together. In some embodiments, the cooking device 20 includes a fan blade 126 and a motor 14. The fan blade 126 is located on the side of the panel 131 facing the cooking cavity 111. The drive shaft 141 of the motor 14 is passed through the panel 131 and is connected to the fan blade 126. The main body 142 of the motor 14 is located in the installation cavity 112. The drive shaft 141 of the motor 14 passes through the panel 131 and is connected to the fan blade 126. The heating element 132 is located between the main body 142 of the motor 14 and the panel 131, thus helping to improve the compactness and sealing of the structure of the cooking device 20. Since the fan blade 126 is located on the side of the panel 131 facing the cooking cavity 111, the fan blade 126 is opposite to the cooking cavity 111. The fan blade 126 can form a hot air flow generated by the heating element 132 and transport it to the cooking cavity 111, thereby helping to make the hot air flow more evenly distributed in the cooking cavity 111. In addition, the fan blade 126 is located on the side of the panel 131 facing the cooking cavity 111 so that the fan blade 126 can deliver the hot air flow while blocking member of the splashing oil smoke, which helps to reduce the oil smoke adhering to the panel 131 and helps to avoid the case that the excessive oil smoke adheres to the panel 131 and reduces the ability of the heat emitted by the heating element 132 to enter the cooking cavity 111 through the panel 131.

In some embodiments, the heating element 132 can be a heating device such as a heating coil, a heating tube, a light wave tube, etc., and the shape of the heating element 132 can be a semi-ring, a ring, or other shapes, which helps to increase the area of the heating element 132, and helps to improve the thermal conductivity effect of the heating element 132. The panel 131 may be of a structure such as glass-ceramics, metal partitions, plastic plates, etc., and may be configured according to actual conditions. For example, in an application scenario where the heating element 132 is a light wave tube, the panel 131 can be made of glass-ceramics, so that the light wave tube can emit high-speed light energy and generate heat quickly, and the glass-ceramics can transmit the thermal radiation generated by the light wave tube to the cooking cavity 111. The thermal radiation generated by the light wave tube can be directly transmitted to the food in the cooking cavity 111, and the food is baked by converting the thermal radiation into thermal energy. In addition, the glass-ceramics can also transfer the heat generated by the light wave tube into the cooking cavity 111, which helps to improve the heating efficiency of the cooking device 20 and helps the cooking device 20 to work efficiently. In other embodiments, the heating element 132 and the panel 131 may also be other types.

In some embodiments, the panel 131 is spaced apart from the heating element 132, that is, there is a gap between the surface of the panel 131 facing away from the cooking cavity 111 and the heating element 132. This helps to avoid contact between the heating element 132 and the panel 131, which helps to avoid that the heat generated by the heating element 132 is directly transferred to the panel 131, causing the temperature of the panel 131 to be too high. In some embodiments, the minimum distance between the panel 131 and the heating element 132 is 0.5mm to 15mm. For example, the minimum distance between the panel 131 and the heating element 132 can be 0.5mm, 2mm, 4mm, 6mm, 8mm, 10mm, 12mm, 14mm, 15mm or any value between the two adjacent values above. In this way, the appropriate distance between the panel 131 and the heating element 132 helps to improve the efficiency of the panel 131 in transmitting the thermal radiation generated by the heating element 132, and also helps to reduce the risk of the panel 131 being overheated and broken due to too small a distance between the panel 131 and the heating element 132.

Please refer to FIGS. 3 and 4 together. In some embodiments, the cooking device 20 can also include a bracket 121. The bracket 121 can be made of metal pieces such as stainless steel, aluminum-plated plates, cold-rolled steel plates, etc., which helps to improve the strength of the bracket 121. The bracket 121 may be provided with a first through hole 1211. For example, the first through hole 1211 may penetrate two opposite surfaces of the bracket 121. The first through hole 1211 is opposite to the cooking cavity 111, and the panel 131 is installed on the bracket 121 and provided in the first through hole 1211, which helps to improve the compactness of the structure of the cooking device 20.

For example, the panel 131 can be set up on the surface of the bracket 121 facing away from the cooking cavity 111 and opposite to the first through hole 1211. At this time, the panel 131 is abutted against the surface of the bracket 121 facing away from the cooking cavity 111; for example, the surface of the bracket 121 facing away from the cooking cavity 111 may be provided with a groove, and the groove is connected with the first through hole 1211. The panel 131 is installed in the groove and faces the first through hole 1211. At this time, the panel 131 abuts the bottom surface of the groove; for another example, the surface of the bracket 121 facing away from the cooking cavity 111 can be provided with an overlapping edge, and the panel 131 can be erected on the overlapping edge and opposite to the first through hole 1211. At this time, the panel 131 abuts the overlapping surface of the bracket 121, which helps to ensure that the panel 131 is mounted on the bracket 121 for stability. The following description will take the example that the surface of the bracket 121 away from the cooking cavity 111 is provided with an overlapping edge, and the panel 131 is set up on the overlapping edge and faces the first through hole 1211.

Please refer to FIGS. 3, 4 and 5 together. In some embodiments, the bracket 121 may be provided with a first annular rim 1213. The first annular rim 1213 is surrounding the outer periphery of the first through hole 1211 and protruding from the side of the bracket 121 facing the panel 131, and the panel 131 abuts the first annular rim 1213. The first annular rim 1213 helps to ensure the stability of the panel 131 installed on the bracket 121, and helps to reduce the risk of the panel 131 becoming loose from the bracket 121. In some embodiments, the width X1 of the first annular rim 1213 protruding from the first through hole 1211 may be 0.5 mm to 10 mm. For example, the width X1 of the first annular rim 1213 protruding from the first through hole 1211 can be 0.5mm, 1mm, 2mm, 3mm, 4mm, 5mm, 6mm, 7mm, 8mm, 9mm, 10mm or any value between the two adjacent values mentioned above. In this way, the first annular rim 1213 has an appropriate width, which helps to improve the supporting force of the first annular rim 1213 to the panel 131, helps to prevent the first annular rim 1213 from reducing the thermal conductivity effect of the panel 131 due to its excessive width for blocking the excessive area of the panel 131, and also helps to reduce the risk of the panel 131 becoming loose from the bracket 121 due to the small width of the first annular rim 1213. Among them, the first annular rim 1213 can be made of stainless steel, aluminum-plated plate, cold-rolled steel plate and other metal materials. The first annular rim 1213 can be integrated with the bracket 121 to form a whole body, which helps to simplify the manufacturing and shaping of the bracket 121.

Please refer to FIGS. 3, 4 and 6 together. In some embodiments, the cooking device 20 may also include a perspective plate 123. The perspective plate 123 is installed on the bracket 121. At this time, the perspective plate 123 is opposite to the cooking cavity 111. The perspective plate 123 can be a transparent structure such as glass or transparent plastic. The perspective plate 123 helps the user to observe the state of the food in the cooking cavity 111. For example, the user can observe the color and shape of the food in the cooking cavity 111 through the perspective plate 123. etc., by observing the color, shape and other conditions of the food in the cooking cavity 111, thereby meeting the user's food processing needs. In this way, the user can understand the status of the food in the cooking cavity 111 without opening the cooking cavity 111, which helps to reduce the number of times the user opens and closes the cooking cavity 111 and improves the working efficiency of the cooking device 20.

In some embodiments, the bracket 121 can also be provided with a second through hole 1212. For example, the second through hole 1212 can penetrate two opposite surfaces of the bracket 121. The second through hole 1212 is opposite to the cooking cavity 111 and is spaced apart from the first through hole 1211. The perspective plate 123 is installed on the bracket 121 and provided in the second through hole 1212, which helps to prevent the panel 131 and the perspective plate 123 from interfering with each other. In some embodiments, the second through hole 1212 can be provided close to the edge of the bracket 121 relative to the first through hole 1211, and/or the center of the bracket 121 is located in the first through hole 1211, which helps to better layout the structure of the bracket 121, so as to make the position arrangement of the panel 131 and the perspective plate 123 more reasonable. For example, the second through hole 1212 can be provided close to the edge of the bracket 121 relative to the first through hole 1211; for another example, the center of the bracket 121 can also be located at the first through hole 1211, then the first through hole 1211 can surround the center of the bracket 121; for another example, the second through hole 1212 can be set close to the edge of the bracket 121 relative to the first through hole 1211, while the center of the bracket 121 is located in the first through hole 1211, which can be set according to the actual situation. This helps to better layout the structure of the bracket 121, so that the positions of the panel 131 and the perspective plate 123 are more reasonably arranged. Among them, the area of the first through hole 1211 can be larger than the area of the second through hole 1212, and the area of the panel 131 can be correspondingly larger than the area of the perspective plate 123. This helps to ensure that the panel 131 has a sufficient working area, and also helps to avoid the escape of thermal radiation within the cooking cavity 111 due to the large area of the perspective plate 123.

In some embodiments, the fan blade 126 is opposite to the first through hole 1211. At this time, the fan blade 126 and the panel 131 are both located in the first through hole 1211. This helps to improve the compactness of the structure of the cooking device 20 and helps to ensure that the fan blade 126 can better form the heat generated by the heating element 132 into a hot air flow and transport it to the cooking cavity 111.

In some embodiments, the perspective plate 123 can be set up on the surface of the bracket 121 facing away from the cooking cavity 111 and opposite to the second through hole 1212. At this time, the perspective plate 123 abuts against the surface of the bracket 121 facing away from the cooking cavity 111; for example, the surface of the bracket 121 away from the cooking cavity 111 may be provided with a groove. The groove is connected with the second through hole 1212. The perspective plate 123 is installed in the groove and faces the second through hole 1212. At this time, the perspective plate 123 abuts against the bottom surface of the groove; for another example, the surface of the bracket 121 facing away from the cooking cavity 111 can be provided with an overlapping edge, and the perspective plate 123 can be set up on the overlapping edge and opposite to the second through hole 1212. At this time, the perspective plate 123 is abutted against the surface of the overlapping edge of the bracket 121, which helps to ensure the stability of the perspective plate 123 installed on the bracket 121. The following description takes the example that the surface of the bracket 121 away from the cooking cavity 111 is provided with an overlapping edge, and the perspective plate 123 is set up on the overlapping edge and faces the second through hole 1212.

In some embodiments, the bracket 121 may be provided with a second annular rim 1214, the second annular rim 1214 is surrounding the outer periphery of the second through hole 1212 and protruding from the side of the bracket 121 facing the perspective plate 123. The perspective plate 123 abuts the second annular rim 1214, and the second annular rim 1214 helps to ensure the stability of the perspective plate 123 installed on the bracket 121, and helps to reduce the risk of the perspective plate 123 loosening from the bracket 121. In some embodiments, the width X2 of the second annular rim 1214 protruding from the second through hole 1212 may be 0.5 mm to 10 mm. For example, the width X2 of the second annular rim 1214 protruding from the second through hole 1212 can be 0.5mm, 1mm, 2mm, 3mm, 4mm, 5mm, 6mm, 7mm, 8mm, 9mm, 10mm or any value between the two adjacent values mentioned above. In this way, the second annular rim 1214 has an appropriate width, which helps to improve the supporting force of the second annular rim 1214 to the perspective plate 123, helps to prevent the second annular rim 1214 from blocking too much area of the perspective plate 123 due to its excessive width, thereby reducing the viewing range of the perspective plate 123, and also helps to reduce the risk of the perspective plate 123 becoming loose from the bracket 121 due to the small width of the second annular rim 1214. Among them, the second annular rim 1214 can be made of stainless steel, aluminum-plated plate, cold-rolled steel plate and other metal materials. The second annular rim 1214 can be integrated with the bracket 121 to form a whole body, which helps to simplify the manufacturing and shaping of the bracket 121. In this way, the panel 131 and the perspective plate 123 are assembled through the same structure, which helps to reduce the number of parts and improve the compactness of the structure of the cooking device 20.

When the cooking device 20 needs to be cleaned, the surfaces of the bracket 121, the panel 131 and the perspective plate 123 facing the cooking cavity 111 can be cleaned directly, or the panel 131 and the perspective plate 123 can be directly disassembled from the bracket 121 for cleaning, which is helpful to facilitate the cleaning of the cooking device 20.

In some embodiments, the cooking device 20 may further include a closed member 19 located between the second annular rim 1214 and the perspective plate 123, and the closed member 19 may raise the sealing performance of the second annular rim 1214 and the perspective plate 123, which helps to prevent the hot air in the cooking cavity 11 from escaping and reducing the working efficiency of the cooking device 20.

In some embodiments, the bracket 121 is detachably connected to the pot body 11. For example, the bracket 121 can be detachably connected to the pot body 11 through clamping, fastener connection, etc. In the following, the bracket 121 detachably connected to the pot body 11 through clamping is taken as an example for description. For example, the bracket 121 can be provided with a first snapping portion, the pot body 11 can be provided with a second snapping portion, and the first snapping portion snaps into the second snapping portion. When the cooking device 20 needs to be assembled, the bracket 121 together with the panel 131 and the perspective plate 123 can be directly installed on the second snapping portion through the first snapping portion, thereby facilitating the assembly of the cooking device 20.

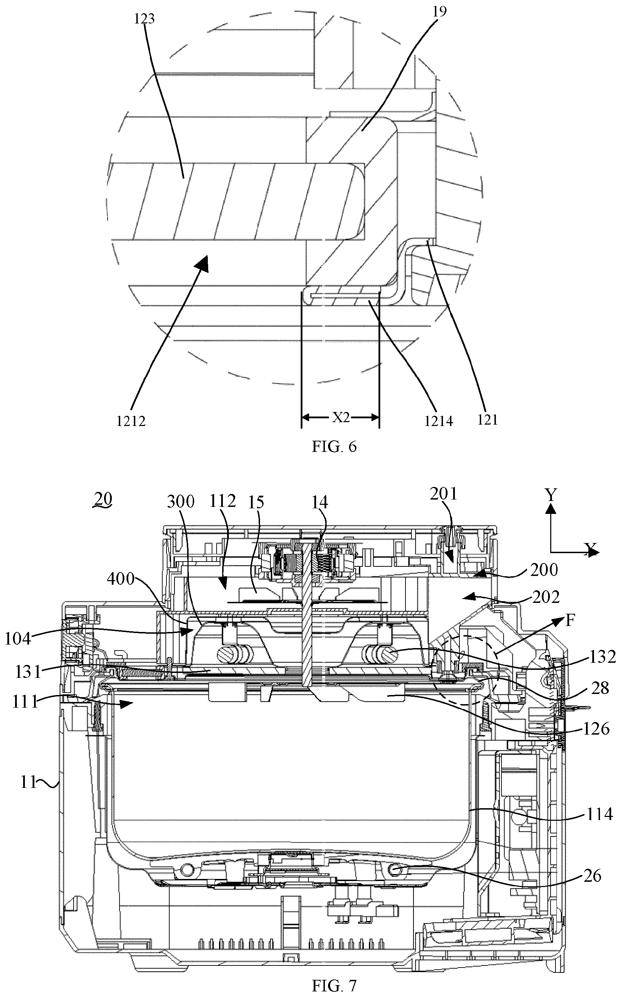

Please refer to FIGS. 7, 8 and 9 together. The cooking device 20 is provided with independent cooking exhaust channel 201 and first heat dissipation channel 202, and the cooking exhaust channel 201 has the cooking air inlet 201a and the cooking exhaust port 201b. The cooking air inlet 201a is connected to the cooking cavity 111. The first heat dissipation channel 202 has a first heat dissipation air inlet 202a and a first heat dissipation exhaust port 202b. The first heat dissipation air inlet 202a is connected to the installation cavity 112, and the first heat dissipation exhaust port 202b may not be connected to the cooking exhaust port 201b. In this way, the air containing grease or water vapor generated by cooking food in the cooking cavity 111 can be discharged from the cooking exhaust channel 201, and the hot air generated in the installation cavity 112 can be discharged from the first heat dissipation channel 202. The cooking exhaust channel 201 and the first heat dissipation channel 202 are independent of each other, and the first heat dissipation exhaust port 202b is not connected with the cooking exhaust port 201b, which helps to reduce the risk of the flow of air containing grease or water vapor generated by cooking food in the cooking cavity 111 to the installation cavity 112. Therefore, the assemblies installed in the installation cavity 112 are less likely to be contaminated, and thus the assemblies installed in the installation cavity 112 are less likely to be damaged. It can be understood that the cooking exhaust channel 201 and the first heat dissipation channel 202 are independent of each other, that is to say, the cooking air inlet 201a and the first heat dissipation air inlet 202a are isolated from each other; the channel section between the cooking air inlet 201a to the cooking exhaust port 201b of the cooking exhaust channel 201 and the channel section between the first heat dissipation air inlet 202a to the first heat dissipation exhaust port 202b of the first heat dissipation channel 202 are isolated from each other; the cooking exhaust port 201b and the first heat dissipation exhaust port 202b can be isolated or arranged adjacently. In addition, the first heat dissipation exhaust port 202b is not connected with the cooking exhaust port 201b, that is to say, the first heat dissipation exhaust port 202b and the cooking exhaust port 201b are isolated from each other; or, the first heat dissipation exhaust port 202b is arranged adjacently from the cooking exhaust port 201b. There are many options for the relative position of the installation cavity 112 and the cooking cavity 111. For example, the installation cavity 112 can be located above the cooking cavity 111; for another example, the installation cavity 112 and the cooking cavity 111 are arranged side by side along the length or width direction of the pot body 11.

In some embodiments, referring to FIGS. 7 to 10, the cooking exhaust port 201b and the first heat dissipation exhaust port 202b may face different directions. Specifically, corresponding holes will be opened on the pot body 11 corresponding to the positions of the cooking exhaust port 201b and the first exhaust port. The cooking exhaust port 201b and the first heat dissipation exhaust port 202b are arranged at different positions, so that holes provided on the pot body 11 are smaller, thereby improving the aesthetics of the pot body 11. In addition, the cooking exhaust port 201b and the first heat dissipation exhaust port 202b face different directions, which can reduce the risk of the air containing grease or water vapor discharged from the cooking exhaust port 201b flowing back into the installation cavity 112.

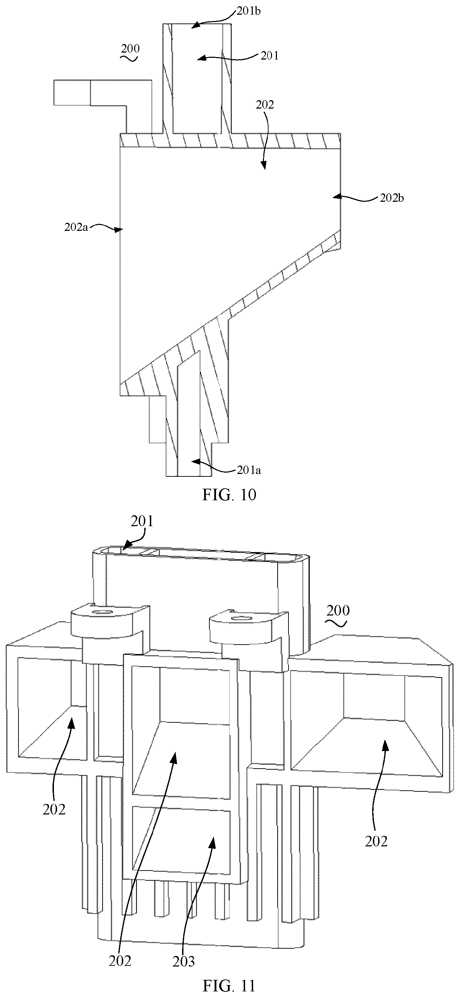

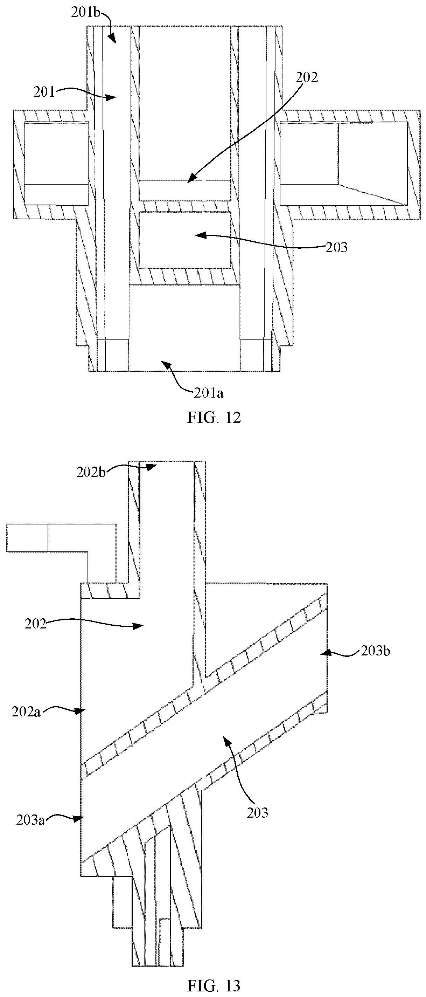

In some embodiments, referring to FIGS. 11 to 13, the cooking exhaust port 201b and the first heat dissipation exhaust port 202b are both facing the top of the cooking device 20. In this way, the cooking exhaust port 201b and the first heat dissipation exhaust port 202b can face the same direction, and the temperature of the hot air discharged by the first heat dissipation exhaust port 202b is lower than that of the air containing grease or water vapor discharged by the cooking exhaust port 201b, so that the hot air discharged from the first heat dissipation exhaust port 202b has a cooling effect on the air containing grease or water vapor discharged from the cooking exhaust port 201b, which helps to reduce the risk of scalding the user with air containing grease or water vapor discharged from the cooking exhaust port 201b.

In some embodiments, the cooking exhaust port 201b may be located on the top of the cooking device 20, that is, the cooking exhaust port 201b is located on the top of the pot body 11. Specifically, the cooking device 20 is generally placed close to the wall during use, and the cooking exhaust port 201b can be provided on the top of the pot body 11 so that the air containing grease or water vapor discharged from the cooking exhaust port 201b flows upward. It helps to reduce the risk of the air containing grease or water vapor discharged from the cooking exhaust port 201b contaminating the wall, thereby facilitating the user to process the air containing grease or water vapor discharged from the cooking exhaust port 201b (for example, the user can discharge air containing grease or water vapor to the outside through a range hood).

In some embodiments, referring to FIGS. 7 to 10, the length direction of the cooking exhaust channel 201 extends along the height direction Y of the cooking device 20. In this way, the air containing grease or water vapor generated by the cooking cavity 111 can be directly discharged along the length direction of the cooking exhaust passage 201, so that the cooking exhaust passage 201 has less obstruction to the air containing grease or water vapor, which helps to discharge air containing grease or water vapor quickly from the cooking cavity 111, thereby improving the exhaust efficiency of the cooking cavity 111.

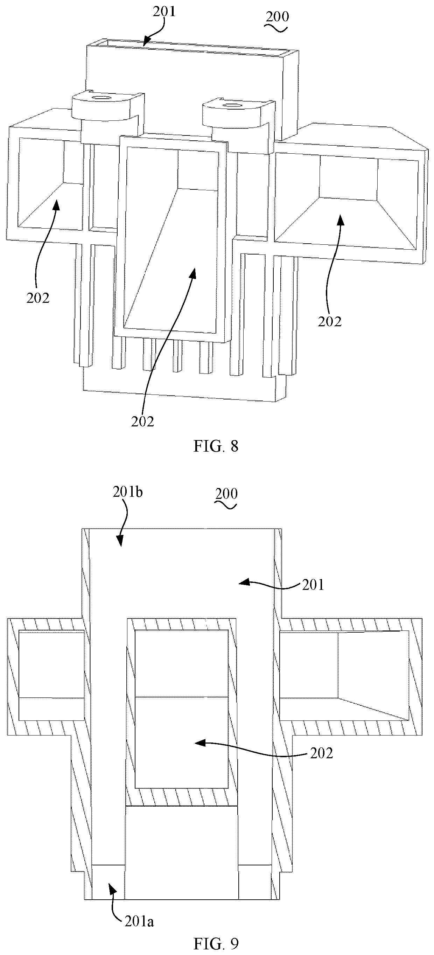

In some embodiments, referring to FIGS. 8 to 10, the length direction of the cooking exhaust channel 201 intersects the length direction of the first heat dissipation channel 202. The cooking exhaust channel 201 surrounds the peripheral side of the first heat dissipation channel 202, or the first heat dissipation channel 202 surrounds the peripheral side of the cooking exhaust channel 201. In this way, the cooking exhaust channel 201 and the first heat dissipation channel 202 may partially overlap and not communicate with each other in their respective length directions, thereby making the structure of the cooking device 20 more compact and thus the size of the cooking device 20 smaller. And the cooking exhaust channel 201 surrounds the peripheral side of the first heat dissipation channel 202, and the temperature of the hot air discharged from the first heat dissipation channel 202 is lower than the temperature of the air containing grease or water vapor discharged from the cooking exhaust channel 201, so that the hot air discharged from the first heat dissipation channel 202 has a cooling effect on the air containing grease or water vapor discharged from the cooking exhaust channel 201, which helps to reduce the risk of users being scalded by air containing grease or water vapor discharged from the cooking exhaust channel 201.

In some embodiments, the length of the cooking exhaust channel 201 is 10mm~100mm, and the length of the cooking exhaust channel 201 is 10mm, 15mm, 20mm, 25mm, 30mm, 35mm, 40mm, 45mm, 50mm, 55mm, 60mm, 65mm, 70mm, 75mm, 80mm, 85mm, 90mm, 95mm or 100mm, etc., so that the cooking exhaust channel 201 can play a role in guiding the air containing water vapor in the cooking cavity 111. In some embodiments, the length of the first heat dissipation channel 202 is 5mm~150mm, and the length of the first heat dissipation channel 202 is 5mm, 10mm, 15mm, 20mm, 25mm, 30mm, 35mm, 40mm, 45mm, 50mm, 55mm, 60mm, 65mm, 70mm, 75mm, 80mm, 85mm, 90mm, 95mm, 100mm, 105mm, 110mm, 115mm, 120mm, 125mm, 130mm, 135mm, 140mm, 145mm or 150mm, etc., so that the first heat dissipation channel 202 can play a role in guiding the hot air in the installation cavity 112.

In some embodiments, the cooking device 20 may further include an exhaust part 200, and the cooking exhaust channel 201 and the first heat dissipation channel 202 may be integrated into the exhaust part 200. In this way, the cooking exhaust channel 201 and the first heat dissipation channel 202 are integrated into the exhaust part 200, which facilitates the installation of the cooking exhaust channel 201 and the first heat dissipation channel 202 in the cooking device 20. The structure is simple and easy to install, and it also makes the structure of the cooking device 20 relatively compact. The exhaust part 200 can be connected to the pot body 11 in various ways. For example, the exhaust part 200 can be connected to the pot body 11 through screws; for another example, the exhaust part 200 can be connected to the pot body 11 through bolts; for another example, the exhaust part 200 can be connected to the pot body 11 through screws. In addition, the pot body 11 may also be provided with an air inlet (not shown) connected to the installation cavity 112, so that the hot air in the installation cavity 112 can be circulated.

Referring back to FIG. 7, the cooking device 20 further includes a heat shield 300 and a reflective cover 400. The reflective cover 400 and the heat shield 300 enclose to form a heat insulation space 104. The reflective cover 400 is located between the installation cavity 112 and the heat insulation space 104, and the heat shield 300 is located between the heat insulation space 104 and the cooking cavity 111. The heating element 132 is located on a side of the heat shield 300 away from the heat insulation space 104 and opposite to the cooking cavity 111. The reflective cover 400 can reflect light waves from the heating element 132 to improve heating efficiency. The heat insulation space 104 formed by the cooking cavity 111 and the heat shield 300 can reduce the influence of the relatively high-temperature heating element 132 on the motor 14 installed in the installation cavity 112.

Referring to FIGS. 7, 14 to 16, the exhaust part 200 also includes a second heat dissipation channel 203. The second heat dissipation channel 203 is independent of the cooking exhaust channel 201. The second heat dissipation channel 203 has a second heat dissipation air inlet 203a and the second heat dissipation exhaust port 203b. The second heat dissipation air inlet 203a is connected to the heat insulation space 104, and the second heat dissipation exhaust port 203b is not connected to the cooking exhaust port 201b. Specifically, the second heat dissipation channel 203 can be used to discharge hot air from the heat insulation space 104, thereby reducing the temperature of the air in the heat insulation space 104, thereby improving the heat insulation effect of the heat insulation space 104. Among them, the second heat dissipation channel 203 and the cooking exhaust channel 201 are independent of each other. That is to say, the first heat dissipation air inlet 202a and the cooking air inlet 201a can be isolated or arranged adjacently; the channel section between the cooking air inlet 201a and the cooking exhaust port 201b of the cooking exhaust channel 201 is isolated from the channel section between the second heat dissipation air inlet 203a and the second heat dissipation exhaust port 203b of the second heat dissipation channel 203; the cooking exhaust port 201b and the second heat dissipation exhaust port 203b can be isolated, or arranged adjacently. This helps to prevent the hot air in the second heat dissipation channel 203 from flowing back to the cooking exhaust channel 201, and prevent the air in the cooking exhaust channel 201 from flowing back into the second heat dissipation channel 203. In addition, the second heat dissipation exhaust port 203b is not connected with the cooking exhaust port 201b, that is to say, the second heat dissipation exhaust port 203b and the cooking exhaust port 201b are isolated from each other; or the second heat dissipation exhaust port 203b is arranged adjacently from the cooking exhaust port 201b.

In some embodiments, the cooking exhaust channel 201, the first heat dissipation channel 202 and the second heat dissipation channel 203 can all be integrated into the exhaust part 200. In this way, the cooking exhaust channel 201, the first heat dissipation channel 202 and the second heat dissipation channel 203 are integrated into the exhaust part 200, thereby facilitating the arrangement of the cooking exhaust channel 201, the first heat dissipation channel 202 and the second heat dissipation channel 203 in the cooking device 20. The structure is simple, easy to install, and also makes the structure of the cooking device 20 relatively compact.

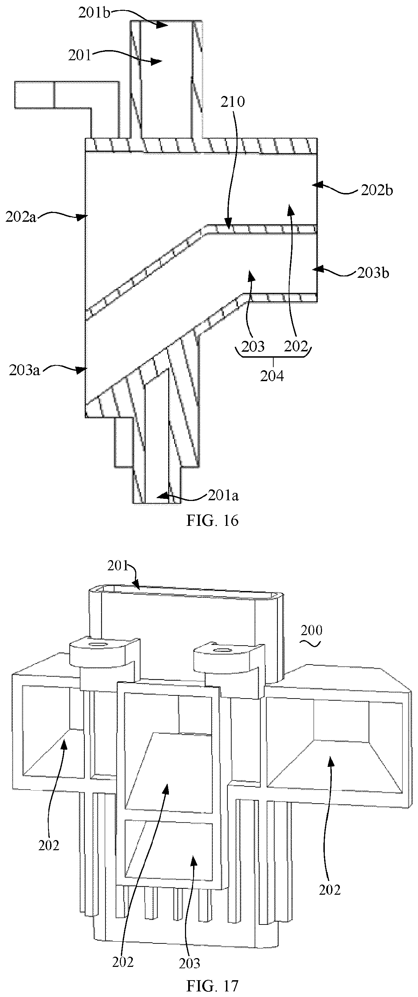

In some embodiments, referring to FIG. 16, the first heat dissipation exhaust port 202b may be located above the second heat dissipation exhaust port 203b, and the first heat dissipation exhaust port 202b and the second heat dissipation exhaust port 203b are arranged side by side. In this way, when the first heat dissipation exhaust port 202b discharges hot air, a negative pressure can be formed above the second heat dissipation exhaust port 203b, which helps to increase the speed at which the second heat dissipation exhaust port 203b discharges hot air, thereby improving the heat dissipation efficiency.

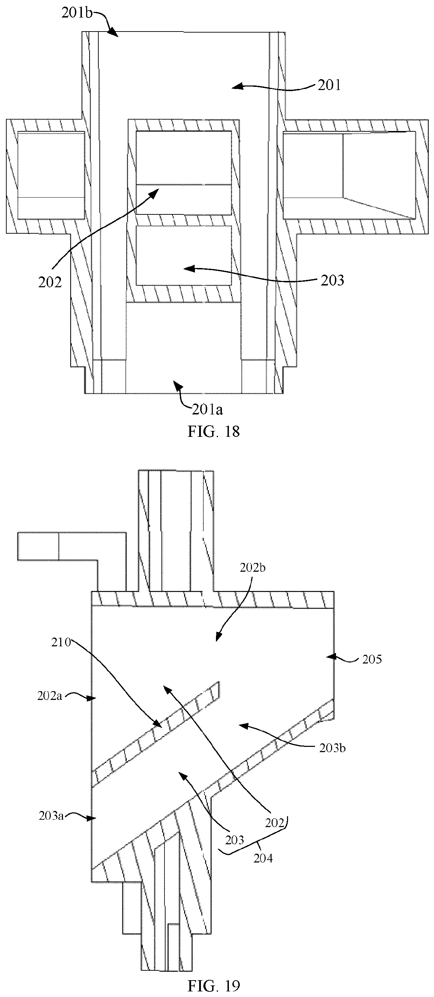

In some embodiments, referring to FIGS. 17 and 18, the length direction of the cooking exhaust channel 201 intersects the length direction of the second heat dissipation channel 203. The cooking exhaust channel 201 surrounds the peripheral side of the second heat dissipation channel 203, or the second heat dissipation channel 203 surrounds the peripheral side of the cooking exhaust channel 201. In this way, the cooking exhaust channel 201 and the second heat dissipation channel 203 may partially overlap and not communicate with each other in their respective length directions, thereby making the structure of the exhaust part 200 more compact and thus the volume of the exhaust part 200 smaller.

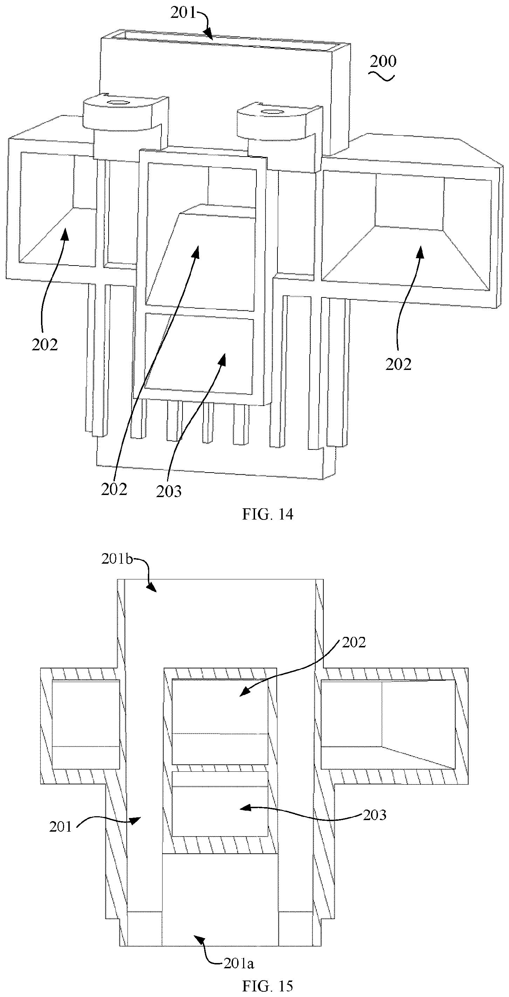

In some embodiments, referring to FIGS. 14 to 16, the exhaust part 200 may be provided with a heat dissipation exhaust channel 204, and the exhaust part 200 is also provided with a partition plate 210. The partition plate 210 is connected to the exhaust part 200 and located in the heat dissipation exhaust channel 204 to separate the heat dissipation exhaust channel 204 to form a first heat dissipation channel 202 and a second heat dissipation channel 203 that are independent of each other. In this way, the exhaust part 200 cooperates with the partition plate 210, thereby facilitating the formation of the first heat dissipation channel 202 and the second heat dissipation channel 203, with a simple structure and low cost.

In some embodiments, the first heat dissipation channel 202 and the second heat dissipation channel 203 may be connected. For example, holes may be opened on the partition plate 210 so that the first heat dissipation channel 202 and the second heat dissipation channel 203 are connected. In some embodiments, the first heat dissipation channel 202 and the second heat dissipation channel 203 may be independent of each other. That is to say, the first heat dissipation air inlet 202a and the second heat dissipation air inlet 203a may be isolated, or arranged adjacently; the channel section between the first heat dissipation air inlet 202a to the first heat dissipation exhaust port 202b of the first heat dissipation channel 202 and the channel sections between the second heat dissipation air inlet 203a to the second heat dissipation exhaust port 203b of the second heat dissipation channel 203 are isolated from each other; the first heat dissipation exhaust port 202b and the second heat dissipation exhaust port 203b can be isolated, or arranged adjacently. This helps to prevent the hot air in the second heat dissipation channel 203 from flowing back to the first heat dissipation channel 202, thereby preventing the motor 14 from being overheated and affecting its operation.

In some embodiments, referring to FIGS. 17 to 19, the heat dissipation exhaust channel 204 may have a first heat dissipation air inlet 202a, a second heat dissipation air inlet 203a, and a heat dissipation exhaust general outlet 205. The first heat dissipation exhaust port 202b and the second heat dissipation exhaust port 203b are located in the heat dissipation exhaust channel 204, and the heat dissipation exhaust general outlet 205 can be connected to the first heat dissipation exhaust port 202b and the second heat dissipation exhaust port 203b. Specifically, the first heat dissipation exhaust port 202b may be located between the first heat dissipation air inlet 202a and the heat dissipation exhaust general outlet 205, and the second heat dissipation exhaust port 203b may be located between the second heat dissipation air inlet 203a and the heat dissipation exhaust general outlet 205. The channel section between the heat dissipation exhaust general outlet 205 of the heat dissipation exhaust channel 204 to the first heat dissipation exhaust port 202b, and the second heat dissipation exhaust port 203b can be connected to the first heat dissipation channel 202 and the second heat dissipation exhaust channel 203 at the same time, so that the channel section between the heat dissipation exhaust general outlet 205 of the heat dissipation exhaust channel 204 to the first heat dissipation exhaust port 202b and the second heat dissipation exhaust port 203b can be designed to be smaller, so that the structure of the exhaust part 200 is compact and the volume is small. In addition, the pot body 11 only needs to be provided with an air outlet corresponding to the heat dissipation exhaust general outlet 205, thereby reducing the number of air outlets and corresponding holes in the pot body 11, so that the holes opened in the pot body 11 are smaller, thereby improving the aesthetics of the pot body 11.

Referring back to FIGS. 2 and 3, the reflective cover 400 is located in the installation cavity 112. The reflective cover 400 covers the heating element 132 and the opening of the reflective cover 400 faces the cooking cavity 111. At this time, the heating element 132 is located between the reflective cover 400 and the panel 131. The reflective cover 400 helps to concentrate the heat generated by the heating element 132 and helps to improve the working efficiency of the heating assembly 12. For example, the opening of the reflective cover 400 can face the panel 131 and the surface of the panel 131 facing away from the cooking cavity 111 closes the opening of the reflective cover 400. Then the reflective cover 400 can reflect the thermal radiation generated by the heating element 132 and transmit it to the cooking cavity 111 through the panel 131, which helps to improve the working efficiency of the heating assembly 12.

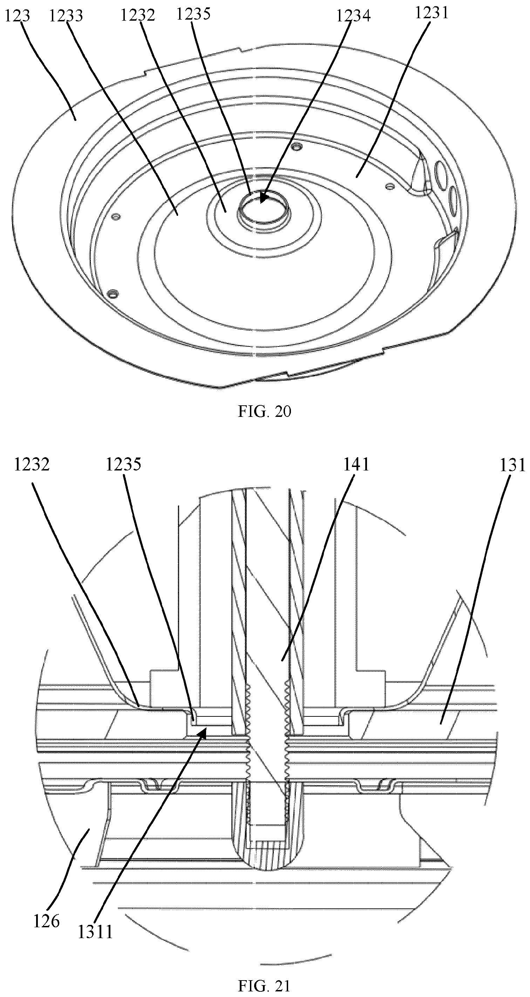

Please refer to FIGS. 2, 3 and 20 together. In some embodiments, the reflective cover 400 has a protrusion 1232 on the side facing the cooking cavity 111. The protrusion 1232 can be a columnar protrusion, a prism-shaped protrusion or a circular cone shaped protrusion, etc., and the protrusion 1232 helps to increase the reflection area of the reflective cover 400 and improve the efficiency of the reflective cover 400 in reflecting thermal radiation. The protrusion 1232 may have a reflective side 1233 facing the cooking cavity 111. For example, the reflective side 1233 may be an outer peripheral surface of the protrusion 1232. The reflective side 1233 may reflect thermal radiation into the cooking cavity 111, helping to maintain the normal operation of the cooking device 20. The heating element 132 surrounds the reflective side 1233, which helps to improve the efficiency of the reflective side 1233 in reflecting the heat of the heating element 132.

In some embodiments, the reflective cover 400 may have a reflective surface 1231. The reflective surface 1231 is arranged around the outer periphery of the reflective side 1233. At this time, the reflective surface 1231 is located on the side of the reflective cover 400 facing the cooking cavity 111. The reflective surface 1231 may reflect the thermal radiation generated by the heating element 132 into the cooking cavity 111. In this way, except for the surface facing the cooking cavity 111, the other surfaces of the heating element 132 are opposite to the reflective surface 1231 and the reflective side 1233, so the reflective cover 400 can efficiently reflect the thermal radiation generated by the heating element 132 through the reflective surface 1231 and the reflective side 1233, which helps to improve the working efficiency of the cooking device 20.

In some embodiments, the cooking device 20 may further include a heat dissipation fan blade 15, and a heat shield 300 covers the outer periphery of the reflective cover 400. The heat shield 300 is located between the heat dissipation fan blade 15 and the reflective cover 400, which helps to reduce the heat loss of the reflective cover 400 and improve the working efficiency of the heating assembly 12. In addition, the heat shield 300 also helps to prevent the heat on the reflective cover 400 from escaping into the space where the motor 14 is located, helps to prevent the motor 14 from being overheated due to absorbing the heat escaped from the reflective cover 400, and helps to reduce the risk of damage to the motor 14 due to excessive temperature. The heat dissipation fan blade 15 can be located between the motor 14 and the heat shield 300, and the heat dissipation fan blade 15 can dissipate heat to the motor 14. The heat dissipation fan blade 15 can also cool down the hot air in the space where the motor 14 is located, which helps to reduce the risk of motor 14 being damaged due to excessive temperature.

In some embodiments, a heat insulation member 16 may be sandwiched between the heat shield 300 and the reflective cover 400. For example, the heat insulation member 16 may have a roughly sheet-like structure, and the heat insulation member 16 may be a mica plate or aluminum silicate ceramic fiber, aerogel felt, or high-temperature resistant plastic. The heat insulation member 16 helps to reduce the heat generated by the heating element 132 from being transmitted to the motor 14, and helps to improve the heat insulation effect of the heat shield 300 on the motor 14. The heat insulation member 16 can be sandwiched in the gap between the heat shield 300 and the reflective cover 400. For example, the heat insulation member 16 can be sandwiched in the gap between the inner surface of the heat shield 300 and the top surface of the reflective cover 400; and for another example, the heat insulation member 16 can be provided in the gap between the inner surface of the heat shield 300 and the top and side surfaces of the reflective cover 400 at the same time. This helps to improve the heat insulation effect of the heat shield 300 on the motor 14 and contributes to ensure that the cooking device 20 works normally.

In some embodiments, the heat insulation member 16 is formed as a heat insulation gasket, and the heat insulation gasket is provided facing the reflective surface 1231. The heat insulation gasket helps to further block the reflective cover 400 from radiating heat to the side of the motor 14, and helps to improve the heat insulation effect of the heat insulation member 16 on the motor 14.

In some embodiments, the protrusion 1232 may be in the shape of a truncated cone or a cone, and the upper bottom surface of the protrusion 1232 faces the cooking cavity 111. For example, when the protrusion 1232 is in the shape of a truncated cone, the upper bottom surface of the protrusion 1232 can be abutted against the panel 131 and face the cooking cavity 111, which helps to increase the area of the reflective side 1233 and improve the reflection efficiency of the reflective side 1233 for the thermal radiation generated by the heating element 132. In addition, since the upper bottom surface is abutted against the panel 131, this helps to improve the compactness of the structure of the heating assembly 12 and helps to ensure the normal operation of the cooking device 20. For another example, when the protrusion 1232 is conical, the conical tip of the protrusion 1232 abuts the panel 131 and faces the cooking cavity 111, which helps to improve the compactness of the structure of the heating assembly 12 and helps to ensure that the cooking device 20 is normally working. In some embodiments, the truncated cone-shaped protrusion 1232 may be a solid structure or an air structure. The truncated cone-shaped protrusion 1232 may have a lower bottom surface or may not have a lower bottom surface.

Please refer to FIGS. 2, 21 and 22 together. In some embodiments, the reflective cover 400 may be provided with a first shaft hole 1234, and the panel 131 may be provided with a second shaft hole 1311. The drive shaft 141 passes through the first shaft hole 1234 and the second shaft hole 1311. The drive shaft 141 can be connected to the fan blade 126 by passing through the first shaft hole 1234 and the second shaft hole 1311, which helps to ensure the normal operation of the cooking device 20. The reflective cover 400 may include a snap ring 1235 located on the end surface of the protrusion 1232 facing the panel 131. The snap ring 1235 surrounds the drive shaft 141. The reflective cover 400 may be connected to the panel 131 through the snap ring 1235. For example, the snap ring 1235 may be inserted into the second shaft hole 1311, which helps to ensure the tightness of the reflective cover 400 connected to the panel 131, and helps to ensure that the heating assembly 12 works efficiently.

In some embodiments, the reflective surface 1231 may also include a first reflective surface 1236 and a second reflective surface 1237. The first reflective surface 1236 is located between the reflective side 1233 and the second reflective surface 1237. The first reflective surface 1236 may be approximately parallel to the panel 131, and the second reflective surface 1237 can be arranged at a certain angle with the panel 131 and the second reflective surface 1237 faces the cooking cavity 111. For example, the second reflective surface 1237 can be arranged at 30 degrees, 35 degrees, 40 degrees, 45 degrees, 50 degrees, 60 degrees setting or any value between the two adjacent values mentioned above with the panel 131, which helps to increase the reflection area of the second reflective surface 1237. In this way, the first reflective surface 1236 can reflect the thermal radiation generated by the top surface of the heating element 132 opposite the first reflective surface 1236 to the panel 131, and the reflective side 1233 can reflect the thermal radiation generated by the inner surface of the heating element 132 opposite the reflective side 1233 to the panel 131. The second reflective surface 1237 can reflect the thermal radiation generated by the outer side of the heating element 132 opposite the second reflective surface 1237 to the panel 131. This helps to ensure that the thermal radiation generated by each surface of the heating element 132 can be reflected to the panel 131 through the reflective cover 400, and helps to improve the reflection efficiency of the reflective cover 400.

In some embodiments, the reflective surface 1231 is spaced apart from the heating element 132, that is, there is a gap between the reflective surface 1231 and the heating element 132. This helps to avoid contact between the heating element 132 and the reflective surface 1231, and helps to reduce that the heat generated by the heating element 132 is directly transferred to the reflective surface 1231, causing the temperature of the reflective surface 1231 to be too high. In some embodiments, the minimum distance between the reflective surface 1231 and the heating element 132 is 3mm to 20mm. For example, the minimum distance between the reflective surface 1231 and the heating element 132 can be 3mm, 4mm, 5mm, 6mm, 7mm, 8mm, 9mm, 10mm, 15mm, 20mm or any value between the two adjacent values above. In this way, the reflective surface 1231 and the heating element 132 have an appropriate distance, which helps to improve the efficiency of the reflective surface 1231 in reflecting the thermal radiation generated by the heating element 132, and also helps to reduce the risk of oxidation of the reflective surface 1231 due to excessive temperature due to too small a distance between the reflective surface 1231 and the heating element 132.

In some embodiments, the reflective cover 400 is a ceramic piece. For example, the reflective cover 400 can be made of materials such as aluminum oxide, silicon carbide, and silicon nitride. Since the ceramic piece has properties such as non-oxidation, non-conductivity, and high temperature resistance, it helps to improve the oxidation resistance and high temperature resistance of the reflective cover 400, and helps to reduce the risk of the reflective cover 400 being oxidized or broken due to excessive temperature during operation.

In some embodiments, the reflective cover 400 is a metal piece. For example, the reflective cover 400 can be a metal piece such as stainless steel, aluminum-plated plate, cold-rolled steel plate, etc., and the surface of the reflective cover 400 facing the cooking cavity 111 is coated with a coating including titanium oxide. Because the metal piece has good strength and its surface is coated with a coating including titanium oxide, this helps to improve the oxidation resistance of the reflective cover 400 and helps to avoid that the reflective cover 400 be oxidized due to excessive temperature during operation and affects the normal operation of the cooking device 20. The coating including titanium oxide can be applied on the surface of the reflective cover 400 facing the cooking cavity 111 by a brushing method. For example, when applying the coating, a brush can be used to dip the coating into the coating, and then the coating can be applied to a clean surface of the metal piece. The coating including titanium oxide can also be coated on the surface of the reflective cover 400 facing the cooking cavity 111 through a spraying method. For example, when applying the coating, a high-pressure air jet can be used to spray the coating onto a clean metal surface.

In other embodiments, the coating including titanium oxide can also be coated on the reflective surface 1231 and the reflective side 1233 in other ways.

In some embodiments, the heating element 132 can be a heating device such as a heating coil, a heating tube, a light wave tube, etc., and the shape of the heating element 132 can be a semi-ring, a ring, or other shapes, which helps to increase the size of the heating element 132 area, and helps to improve the working efficiency of the heating element 132. The panel 131 can be a structure such as glass, metal partition, plastic plate, etc., and can be set according to the actual situation. For example, in an application scenario where the heating element 132 is a light wave tube, at least part of the panel 131 can be made of glass. For example, at least part of the panel 131 can be made of borosilicate glass. Then the light wave tube can emit high-speed light energy and quickly generate heat. The glass part of the panel 131 can transmit the thermal radiation generated by the light wave tube into the cooking cavity 111. The thermal radiation generated by the light wave tube can be directly transmitted to the food in the cooking cavity 111, and the food can be baked by converting the thermal radiation into heat energy. In addition, glass can also transfer the heat generated by the light wave tube into the cooking cavity 111, which helps to improve the heating efficiency of the heating assembly 12, and helps to ensure that the cooking device 20 works efficiently. For another example, in an application scenario where the heating element 132 is a heating coil, the panel 131 can be a metal partition. The heating coil can generate heat, and the metal partition can transfer the heat generated by the heating coil to the cooking cavity 111, which helps to ensure the normal operation of the cooking device 20.

The thickness of the panel 131 can be 2mm to 5mm. For example, the thickness of the panel 131 can be 2mm, 3mm, 4mm, 5mm or any value between the two adjacent values mentioned above. This helps to ensure that the panel 131 has a suitable thickness, helps to improve the strength of the panel 131, and helps to reduce the risk of the panel 131 being broken due to insufficient strength.

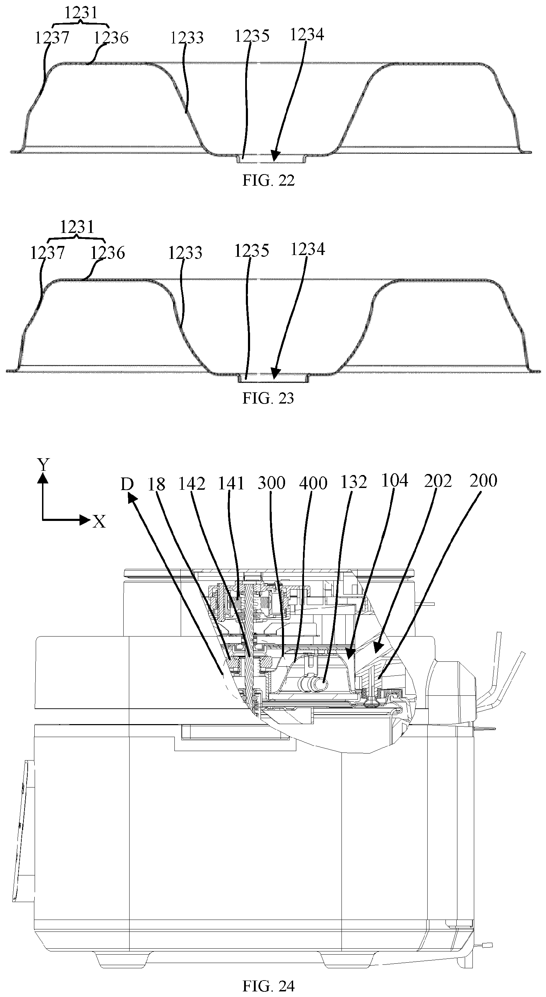

In some embodiments, as shown in FIG. 22, the longitudinal section of the protrusion 1232 can be a slope at the reflective side 1233, so that the reflective side 1233 can be generally a cone, and the cone helps to increase the reflective area of the reflective cover 400 to the heating element 132, and helps to improve the reflection efficiency of the reflective cover 400. In some embodiments, as shown in FIG. 23, the longitudinal section of the protrusion 1232 on the reflective side 1233 can also be an arc, so that the reflective side 1233 can be generally a spherical surface, and the spherical surface can also help to increase the reflective area of the reflective cover 400 to the heating element 132, and help to improve the reflective efficiency of the reflective cover 400.

Please refer to FIGS. 24, 25 and 26 together. In some embodiments, the cooking device 20 also includes a heat insulation assembly 18. The motor 14 is located on the side of the heat shield 300 away from the heating element 132. The drive shaft 141 of the motor 14 passes through the heat shield 300, and the heat insulation assembly 18 is sleeved on the outer periphery of the drive shaft 141. The heat insulation assembly 18 can be made of high-temperature-resistant plastic, silicone, etc., and the heat insulation assembly 18 helps to reduce the risk of hot air in the heat shield 300 entering the motor 14 upward along the drive shaft 141, and helps to reduce the risk of the motor 14 becoming too hot to operate due to absorbing heat. The heat insulation assembly 18 also helps to prevent the steam in the cooking cavity 111 from entering between the heat shield 300. In this way, the heat shield 300 and the heat insulation assembly 18 can jointly provide certain protection for the motor 14, which helps to better insulate the motor 14, and helps to ensure the normal operation of the motor 14. Among them, the heat insulation assembly 18 is made of food-safe material, and the steam in the cooking cavity 111 will not come into contact with the material, which helps to ensure the safety of the food cooked by the cooking device 20.

In some embodiments, the heat insulation assembly 18 may include a heat insulation sleeve 183 and a sealing member 184 connected with each other. The heat insulation sleeve 183 and the sealing member 184 are distributed along the height direction Y of the cooking device 20 and are both sleeved on the outer periphery of the drive shaft 141. The sealing member 184 can cooperate with the heat insulation sleeve 183 to act on the drive shaft 141, which helps to better improve the heat insulation effect between the drive shaft 141 and the hot air in the heat shield 300. In addition, the heat insulation sleeve 183 and the sealing member 184 can insulate the drive shaft 141 from hot air and simultaneously seal the water vapor in the cooking cavity 111, which helps to improve the working efficiency of the cooking device 20.

In some embodiments, the heat insulation sleeve 183 is located between the heating element 132 and the heat shield 300, and the sealing member 184 is located on the side of the heat shield 300 away from the heating element 132. The sealing member 184 helps to improve the sealing performance of the heat insulation assembly 18, and helps to improve the heat insulation effect of the heat insulation assembly 18. For example, the heat insulation sleeve 183 can be sleeved on the part of the drive shaft 141 located inside the heat shield 300, and the sealing member 184 can be sleeved on the part of the drive shaft 141 located outside the heat shield 300. The heat insulation sleeve 183 and the sealing member 184 help to ensure that the drive shaft 141 has a sufficient heat insulation area, and help to ensure the heat insulation effect of the heat insulation assembly 18 on the drive shaft 141.

In some embodiments, the heat insulation assembly 18 may also include a heat insulation ferrule 185 and a locking member 186. The heat insulation ferrule 185 is sleeved on the outer periphery of the heat insulation sleeve 183. One end of the locking member 186 is connected to the heat insulation sleeve 183 and the heat insulation ferrule 185, and the other end of locking member 186 is abutted against the sealing member 184. For example, the locking member 186 can be a nut. One end of the heat insulation sleeve 183 is provided with threads. One end of the locking member 186 cooperates with the thread of the heat insulation sleeve 183 to lock the heat insulation sleeve 183, and the other end of the locking member186 is connected to the sealing member 184. In this way, the heat insulation ferrule 185 and the locking member 186 help to improve the compactness of the structure of the heat insulation assembly 18, and help to improve the stability of the heat insulation sleeve 183 and the sealing member 184 being sleeved on the drive shaft 141, thereby helping to improve the heat insulation effect of the heat insulation sleeve 183 and the sealing member 184 on the drive shaft 141. When the heat insulation assembly 18 needs to be installed on the cooking device 20, the heat insulation sleeve 183, the sealing member 184, the heat insulation ferrule 185 and the locking member 186 can be pre-assembled and then installed on the cooking device 20 in the form of an assembly. This facilitates the installation of the heat insulation assembly 18 and improves the installation efficiency of the heat insulation assembly 18.

In some embodiments, the sealing member 184 may include a first sealing body 1841 and a second sealing body 1842. The first sealing body 1841 abuts against the locking member 186, and the second sealing body 1842 is surrounding the outer periphery of the drive shaft 141 and is abutted against the first sealing body 1841. The first sealing body 1841 and the second sealing body 1842 help to improve the sealing performance of the heat insulation sleeve 183. For example, the first sealing body 1841 can be heat-insulating silica gel. The heat-insulating silica gel has a certain elastic force, which helps to improve the sealing effect of the first sealing body 1841. The second sealing body 1842 can be an oil seal, and the oil seal is sleeved on the drive shaft 141. In this way, the first sealing body 1841 and the second sealing body 1842 help to reduce the risk of hot air in the heat shield 300 entering the motor 14 upward along the drive shaft 141, and help to ensure the normal operation of the motor 14.

Please refer to FIGS. 24, 27 and 28 together. In some embodiments, the cooking device 20 also includes a motor installation frame 12 and a heat insulator 17. The motor installation frame 12 is assembled on the pot body 11, and the motor 14 is mounted on the side of the motor installation frame away from the heating assembly 12. The motor installation frame 12 can provide an installation space for the motor 14 of the cooking device 20.

In some embodiments, the heat insulator 17 is connected to the heat shield 300 and the motor installation frame 12, and is located between the motor installation frame 12 and the heat shield 300. The heat insulator 17 can be a ceramic gasket, mica Gaskets and other high-temperature-resistant structures, in this way, the heat insulator 17 helps to prevent the motor installation frame 12 from contacting the heat shield 300, and helps to prevent the motor installation frame 12 from contacting the hot air generated by the heating element 132, thereby helping to prevent the motor installation frame 12 from melting due to excessive temperature. In this way, the heat shield 300 and the heat insulator 17 can jointly isolate the hot air generated by the heating element 132 from the motor installation frame 12, which helps to prevent the hot air generated by the heating element 132 from affecting the normal operation of the motor 14 on the motor installation frame 12.

In some embodiments, the motor installation frame 12 may be provided with a connection portion 125, and the heat shield 300 may be provided with an installation member 1331. The heat insulator 17 is mounted on the installation member 1331, and the connection portion 125 abuts against the heat insulator 17. In this way, the installation member 1331 can provide an installation space for the heat insulator 17, which helps to ensure the compactness of the connection between the heat insulator 17 and the heat shield 300.

For example, the connection portion 125 can be a connection bump, and the connection portion 125 is protruding from the side of the motor installation frame 12 facing the heat shield 300. The installation member 1331 can be an installation through hole, and the heat insulator 17 is installed in the installation through hole. The connection portion 125 is abutted against the heat insulator 17 and located in the installation member 1331, which helps to improve the compactness of the structure of the motor installation frame 12 and the heat shield 300.

In some embodiments, the connection portion 125 can be a connection bump, and the connection portion 125 is protruding from the side of the motor installation frame 12 facing the heat shield 300. The installation member 1331 can also be an installation bump, and the installation bump is located on the side of the installation member 1331 facing the motor installation frame 12. The heat insulator 17 is located between the connection bump and the installation bump.

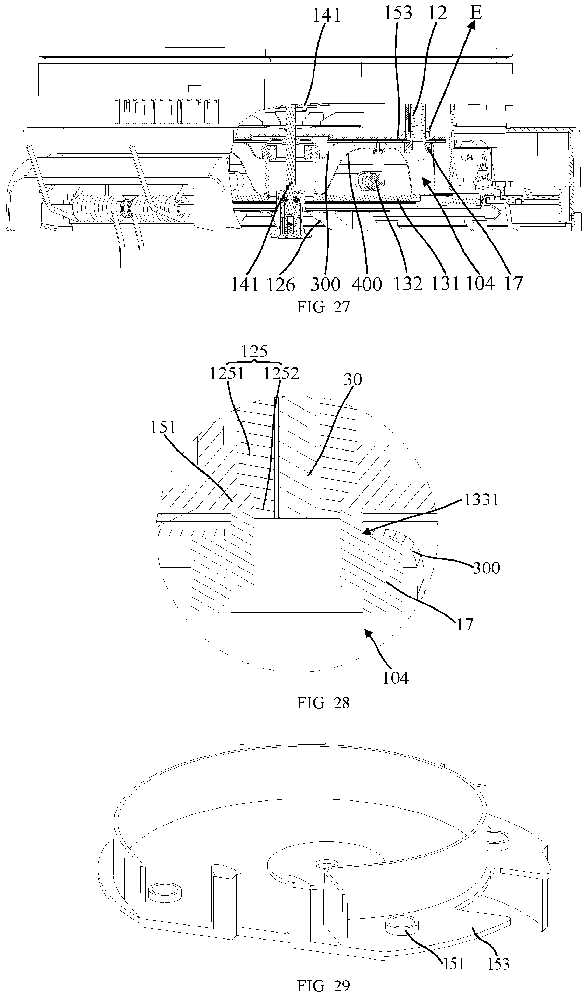

Please refer to FIGS. 28 and 29 together. In some embodiments, the cooking device 20 may also include a volute 153. The volute 153 is located between the motor installation frame 12 and the heat shield 300. The heat insulation assembly 18 is located on the side of the volute 153 away from the motor installation frame 12. The volute 153 is provided with a volute positioning portion 151 which is abutted against the connection portion 125 and the heat insulator 17. The connection portion 125 passes through the volute positioning portion 151 and is abutted against the heat insulator 17. In this way, the motor installation frame 12 can locate the connection position with the heat insulator 17 through the volute positioning portion 151, which helps to improve the accuracy of the position where the motor installation frame 12 is connected to the heat insulator 17.

For example, the volute positioning portion 151 can be protruded on the side of the volute 153 away from the heat shield 300. The volute positioning portion 151 is provided with a positioning through hole. The connection portion 125 may include first connection portion 1251 and the second connection portion 1252 distributed along the height direction Y. The first connection portion 1251 abuts against the volute positioning portion 151. The size of the first connection portion 1251 along the horizontal direction of the cooking device 20 is larger than that of the second connection portion 1252 along the horizontal direction of the cooking device 20. The first connection portion 1251 is located outside the positioning through hole, and the second connection portion 1252 is located inside the positioning through hole and abuts against the heat insulator 17. In this way, when the motor installation frame 12 needs to be installed on the heat shield 300, the heat insulator 17 can be installed on the installation member 1331 first, and then the connection position between the motor installation frame 12 and the heat insulator 17 can be positioned through the volute positioning portion 151, which helps to improve the installation efficiency of the motor installation frame 12.

In some embodiments, the cooking device 20 may also include a fastener 30 that passes through the connection portion 125 and the installation member 1331 to connect the motor installation frame 12 and the heat shield 300. The fastener 30 may be fasteners such as screws, studs, allowing the fastener 30 to tighten the connection between the motor installation frame 12 and the heat shield 300, which helps to prevent the motor installation frame 12 from loosening from the heat shield 300. When the fastener 30 passes through the connection portion 125 and the installation member 1331, the fastener 30 can be separated from the heat insulation space 104 under the action of the connection portion 125 and the heat insulator 17, and the fastener 30 will not contact the hot air in the heat insulation space 104, which helps to prevent the fastener 30 from absorbing heat and increasing its temperature.

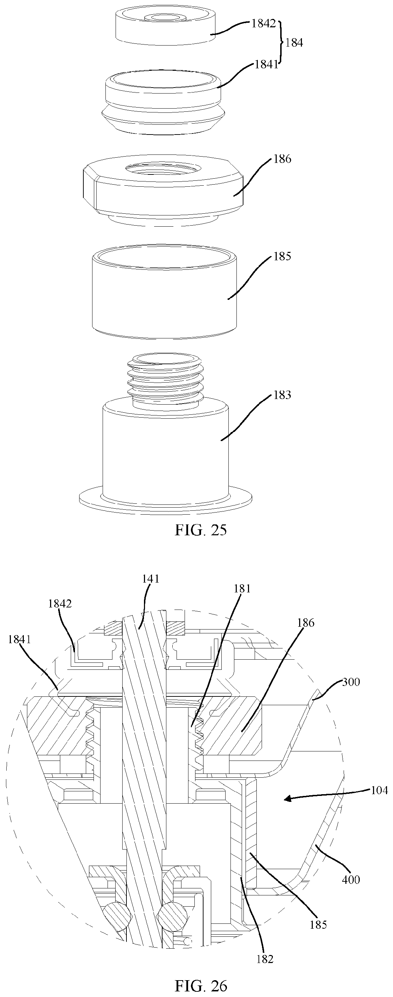

Please refer to FIGS. 26, 30 and 31 together. In some embodiments, the heat insulation assembly 18 can be provided with a heat shield positioning portion 181 and a reflective cover positioning portion 182. The heat shield positioning portion 181 and the reflective cover positioning portion 182 are distributed along the height direction Y of the cooking device 20. The heat shield positioning portion 181 is abutted against the heat shield 300, and the reflective cover positioning portion 182 is abutted against the reflective cover 400. In this way, the heat shield 300 can be positioned up and down with the reflective cover 400 through the heat insulation assembly 18, which helps to improve the accuracy of the installation position of the heat shield 300 on the reflective cover 400, and helps to prevent the heat shield 300 from being displaced to affect the normal operation of the heat shield 300.

For example, the size of the heat shield positioning portion 181 along the horizontal direction of the cooking device 20 is smaller than the size of the positioning portion 182 of the reflective cover 400 along the horizontal direction of the cooking device 20. When the heat shield 300 is installed on the reflective cover 400, the heat insulation assembly 18 can be pre-installed on the reflective cover 400. At this time, the positioning portion 182 of the reflective cover 400 is abutted against the reflective cover 400. Then, the heat shield positioning portion 181 is used to position the installation position of the heat shield 300 and the heat shield 300 is sleeved on the heat shield positioning portion 181. At this time, the heat shield positioning portion 181 is abutted against the heat shield 300, and the positioning portion 182 of the reflective cover 400 is located in the heat insulation space 104. In this way, the heat insulation assembly 18 helps to locate the installation position of the heat shield 300 and the reflective cover 400, and helps to improve the installation efficiency of the heat shield 300.

In some embodiments, the heat shield 300 can be provided with a buckling portion 1332, the reflective cover 400 can be provided with a fitting portion 1321, and the buckling portion 1332 is engaged with the fitting portion 1321. The heat shield 300 can locate and connect to the fitting portion 1321 through the buckling portion 1332, which helps to improve the accuracy of the position of the heat shield 300 installed on the reflective cover 400.

For example, the buckling portion 1332 can be provided on the side of the heat shield 300 facing the reflective cover 400, and the fitting portion 1321 can be provided on the side of the reflective cover 400 facing the heat shield 300. In this way, the heat shield 300 can position the side portion of the heat shield 300 through the buckling portion 1332, which helps to improve the efficiency of installing the heat shield 300 on the reflective cover 400. The number of the buckling portions 1332 may be multiple. The plurality of buckling portions 1332 may be arranged around the side of the heat shield 300. The number of the fitting portions 1321 may be multiple. The plurality of fitting portions 1321 may be arranged around the side of the reflective cover 400. The plurality of buckling portions 1332 are locked in the plurality of fitting portions 1321, which helps to improve the fastening of the heat shield 300 to the reflective cover 400. In this way, the heat shield 300 can be positioned up and down with the reflective cover 400 through the heat insulation assembly 18, and the heat shield 300 can be positioned sideways with the reflective cover 400 through the buckling portion 1332 and the fitting portion 1321, which helps to achieve the dual positioning of the heat shield 300 and the reflective cover 400, and helps to ensure the accuracy of the installation position of the heat shield 300 on the reflective cover 400.

In some embodiments, the side of the heat shield 300 may be provided with an exhaust port 1333. The heat shield 300 and the reflective cover 400 define a heat insulation space 104. The cooking device 20 further includes an exhaust part 200, and the exhaust part 200 is assembled on the pot body 11. The exhaust part 200 is provided with a first heat dissipation channel 202, and the exhaust port 1333 communicates with the heat insulation space 104 and the first heat dissipation channel 202. When the cooking device 20 is working, hot air will accumulate in the heat insulation space 104. Since the exhaust port 1333 communicates with the heat insulation space 104 and the first heat dissipation channel 202, the hot air in the heat insulation space 104 can flow into and discharge from the first heat dissipation channel 202 through the exhaust port 1333, which helps to reduce the accumulation of hot air in the heat insulation space 104, causing the reflective cover 400 to be overheated and oxidized, and helps to ensure the normal operation of the reflective cover 400.

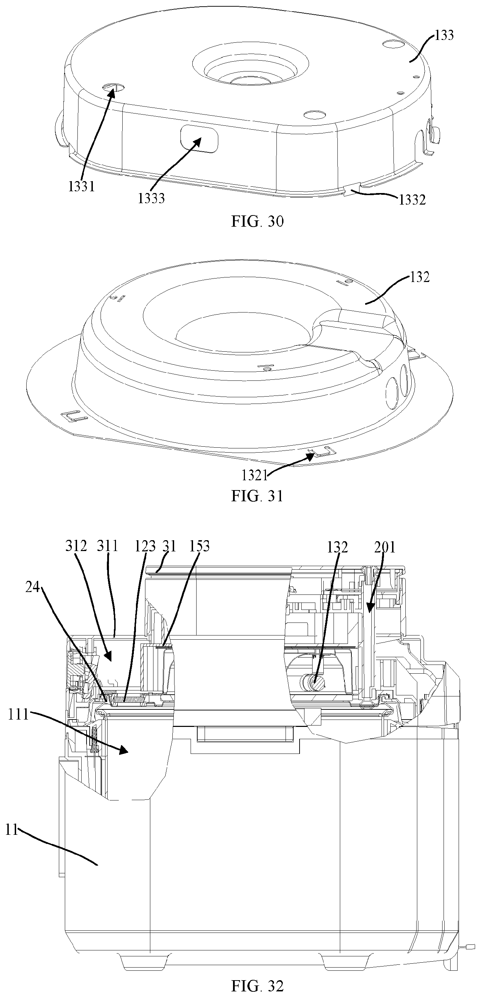

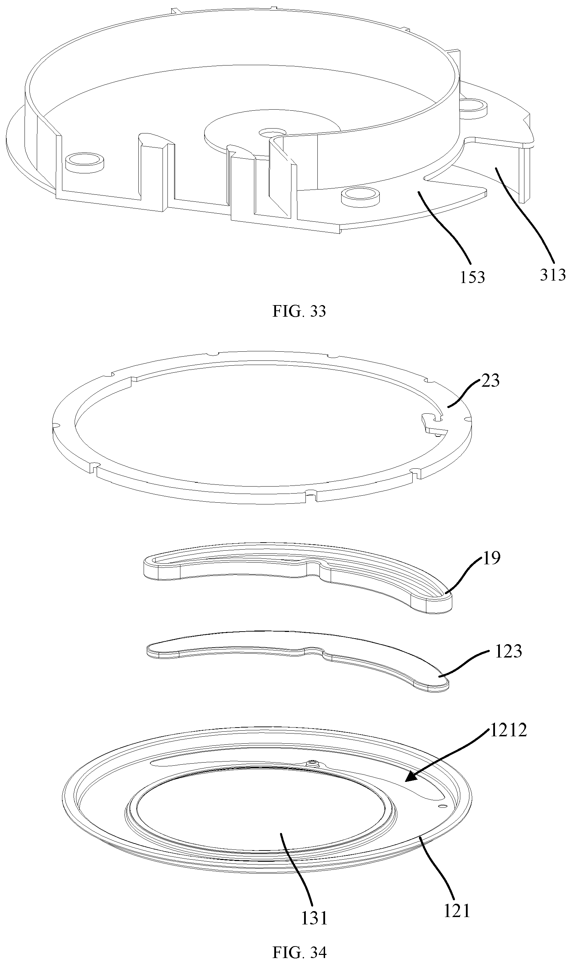

Please refer to FIGS. 32 and 33 together. In some embodiments, the cooking device 20 includes a cover plate 31 and a heat insulation portion 313. The cover plate 31 is assembled to the pot body 11, and the cover plate 31 can cover the devices in the pot body 11. For example, the cover plate 31 can cover the motor 14 and other structures, and the cover plate 31 can provide protection for the assemblies in the pot body 11, which helps to prevent the assemblies in the pot body 11 from being exposed and damaged.

The cover plate 31 is provided with a perspective portion 311, and the perspective plate 123 is located between the cover plate 31 and the cooking cavity 111. The perspective portion 311 and the perspective plate 123 define a perspective channel 312 along the height direction Y of the cooking device 20. In this way, the user can observe the condition of the food in the cooking cavity 111 through the perspective channel 312. For example, the user can observe the color, shape, etc. of the food in the cooking cavity 111 through the perspective channel 312. By observing the color, shape, etc. of the food in the cooking cavity 111, users can determine the cooking state of the food, and then flip the food according to actual needs. In this way, the user can understand the status of the food in the cooking cavity 111 without opening the cooking cavity 111, which helps to reduce the number of times the user opens and closes the cooking cavity 111, and helps to improve the working efficiency of the cooking device 20. The perspective plate 123 can be made of a transparent structure such as glass or transparent plastic, and the perspective portion 311 of the cover plate 31 can be made of a transparent structure such as transparent plastic, which helps to ensure that the perspective channel 312 has appropriate clarity.

In some embodiments, the heat insulation portion 313 is located between the cover plate 31 and the cooking cavity 111, and the heating element 132 is located in the heat insulation portion 313 and opposite to the cooking cavity 111. The heat insulation portion 313 separates the heating element 132 from the perspective channel 312. In this way, the heat insulation portion 313 helps to prevent the hot air generated by the heating element 132 from flowing into the perspective channel 312, helps to prevent the hot air from causing disorder of the air flow in the perspective channel 312 and reducing the clarity of the perspective portion 311 and the perspective plate 123, helps to ensure that the perspective portion 311 and the perspective plate 123 have appropriate clarity, and helps to meet the user's need for observing the food in the cooking cavity 111. In addition, the heat insulation portion 313 is spaced apart from the heating element 132, which also helps to prevent the heating element 132 from being located in the perspective channel 312 and blocking the perspective plate 123, helps to prevent the user from being unable to view the cooking status of the food in the cooking cavity 111 because the perspective plate 123 is blocked, thereby helping to ensure the normal operation of the perspective portion 311 and the perspective plate 123.

In some embodiments, the heat insulation portion 313 can be provided with a heat insulation structure to separate the heating element 132 and the perspective channel 312; for another example, a thermal insulation layer is coated on the side of the heat insulation portion 313 facing the perspective channel 312 to separate the heating element 132 from the perspective channel 312; for another example, the thickness of the heat insulation portion 313 can be increased to separate the heating element 132 from the perspective channel 312. In other embodiments, the heat insulation portion 313 can also be separated from the heating element 132 and the perspective channel 312 in other ways. In the following description, the heat insulation portion 313 is provided with a heat insulation structure to separate the heating element 132 and the perspective channel 312 as an example.

In some embodiments, the volute 153 may be provided with the above-mentioned heat insulation portion 313, which extends along the height direction Y of the cooking device 20 and is located between the perspective channel 312 and the heating element 132, so that the volute 153 can separate the heating element 132 and the perspective channel 312 through the heat insulation portion 313. The heat insulation portion 313 helps to prevent the hot air generated by the heating element 132 from flowing into the perspective channel 312. In this way, the volute 153 has a simple structure that separates the heating element 132 and the perspective channel 312, which helps to simplify the structure of the volute 153 and facilitate manufacturing.

In some embodiments, the cooking device 20 may be provided with a cooking exhaust channel 201, and the cooking exhaust channel 201 is connected to the cooking cavity 111. Then the steam in the cooking cavity 111 can be discharged in time through the cooking exhaust channel 201, which helps to avoid that too much steam accumulated in the cooking cavity 111 affects the normal operation of the cooking device 20. The cooking exhaust channel 201 is located on the side of the heating element 132 away from the perspective plate 123. For example, when the perspective plate 123 is located on the left side of the pot body 11 close to the cooking device 20, the cooking exhaust channel 201 is located on the right side of the pot body 11 close to the cooking device 20, which helps to prevent the steam in the cooking exhaust channel 201 from entering the perspective channel 312, and helps to prevent the steam from adhering to the perspective plate 123 or the perspective portion 311 to reduce the clarity of the perspective portion 311 and the perspective plate 123, causing the user to be unable to clearly check the condition of the food in the cooking cavity 111.

Please refer to FIGS. 32, 34 and 35 together. In some embodiments, the perspective plate 123 can be sandwiched and installed in the bracket 121 and the body shell 24. At this time, the perspective plate 123 is located between the bracket 121 and the body shell 24 and is opposite to the cooking cavity 111, which helps to improve the compactness of the structure of the cooking device 20.

In some embodiments, the perspective plate 123 is covered with the closed member 19, or one side of the perspective plate 123 is abutted against the closed member 19. For example, the closed member 19 can be arranged around the periphery of the perspective plate 123 to improve the sealing performance of the perspective plate 123 installed on the bracket 121, which helps to prevent the hot air in the cooking cavity 111 from escaping into the perspective channel 312, and helps to ensure that the perspective channel 312 maintains appropriate clarity.

For another example, one side of the perspective plate 123 can be abutted against the closed member 19. The closed member 19 helps to improve the sealing performance between the bracket 121 and the perspective plate 123, helps to prevent the hot air in the cooking cavity 111 from escaping into the perspective channel 312, and helps to ensure that the perspective channel 312 maintains appropriate clarity.

In some embodiments, the cooking device 20 may further include a pressure ring 23, which is pressed against the side of the closed member 19 away from the bracket 121, so that the pressure ring 23 helps to improve the sealing performance of the closed member 19.

For example, when the pressure ring 23 is pressed against the closed member 19 and the closed member 19 is located between the pressure ring 23 and the bracket 121, the pressure ring 23 and the bracket 121 can jointly press against the closed member 19. The closed member 19 can be elastically deformed to resist the perspective plate 123 under the action of the pressure ring 23 and the bracket 121, which helps to improve the sealing effect of the closed member 19 on the perspective plate 123, and helps to prevent the hot air in the cooking cavity 111 from escaping into the perspective channel 312 to reduce the clarity of the perspective portion 311 and the perspective plate 123.

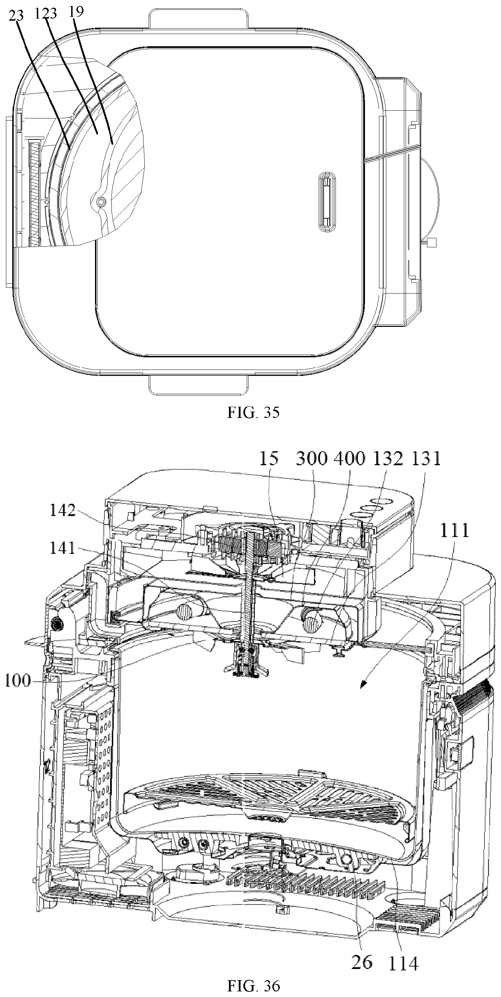

Please refer to FIGS. 1 and 36 together. The cooking device 20 includes a fan assembly 100. The fan assembly 100 is located in the cooking cavity 111 to facilitate air flow in the cooking cavity 111. The fan assembly 100 is detachably assembled to the drive shaft 141 of the motor 14, and the motor 14 can drive the fan assembly 100 to rotate to achieve the functions required by the cooking device 20.

In some embodiments, the fan assembly 100 can be located above the cooking cavity 111 and below the panel 131. The main body 142 of the motor 14 can be located above the heat dissipation fan blade 15, and the drive shaft 141 of the motor 14 can drive the heat dissipation fan blade 15 and the fan assembly 100 to rotate. The heat dissipation fan blade 15 and the fan assembly 100 can rotate coaxially. The heat dissipation fan blade 15 can discharge excess heat in the installation cavity 112 to the outside of the cooking device 20. The fan assembly 100 is used in the cooking cavity 111 to stir the air in the cooking cavity 111 so as to drive the hot air to flow. Since the fan assembly 100 is in direct contact with the oil fume generated by the high temperature of the food, a large amount of oil stains will adhere to it over time, and the fan assembly 100 needs to be cleaned.

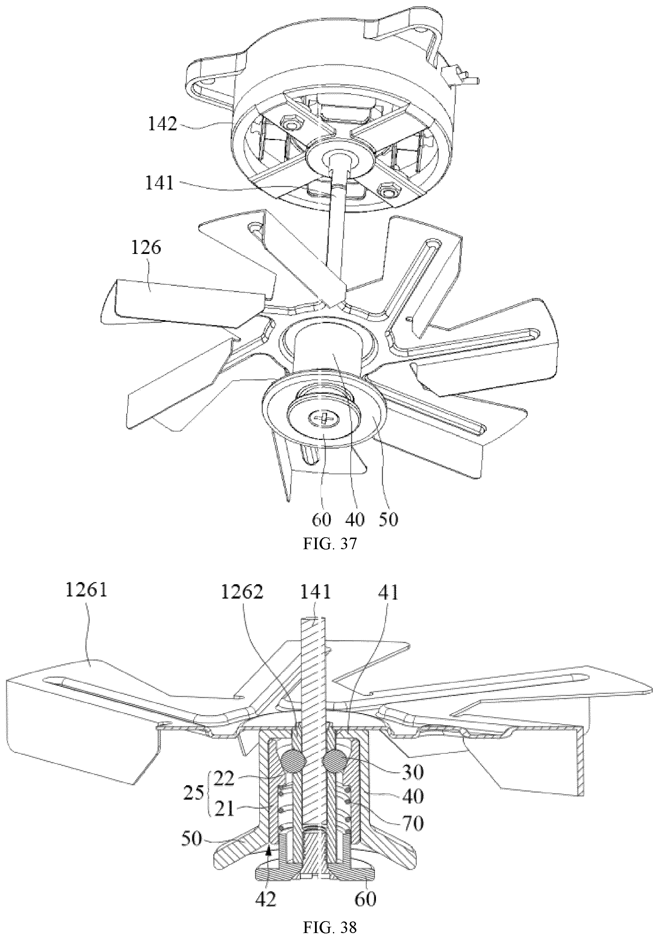

Referring to FIGS. 37 to 39, the fan assembly 100 includes a fan blade 126, a connection sleeve 25 and a locking member 30. The connection sleeve 25 is provided on the fan blade 126, and the locking member 30 is provided between the fan blade 126 and the connection sleeve 25. The fan blade 126 includes a blade 1261 and an installation member 1262, and the blade 1261 and the installation member 1262 are connected. The installation member 1262 may be adapted to be installed into the drive shaft 141 of the motor 14, and the blade 1261 may be rotated by the motor 14 to generate wind.

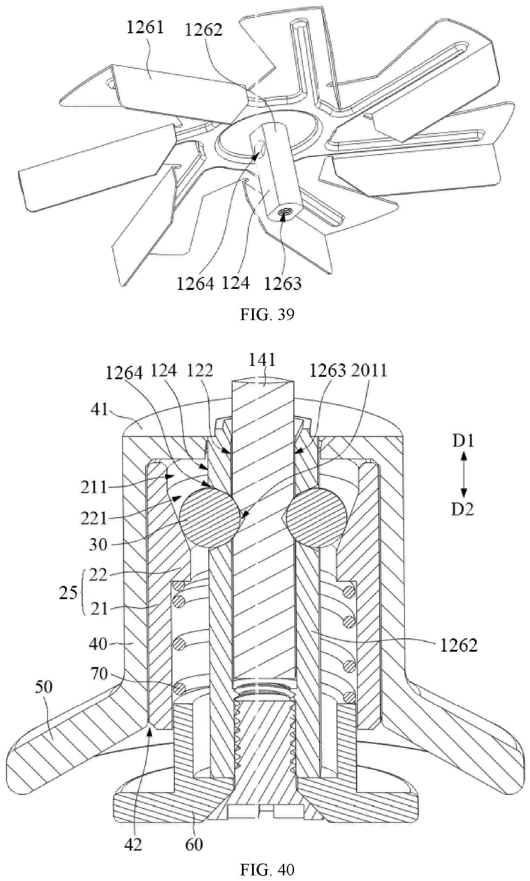

The installation member 1262 is provided with a shaft hole 1263 in the axial direction. The shaft hole 1263 is suitable for accommodating the drive shaft 141 of the motor 14 so that the drive shaft 141 of the motor 14 can be inserted into the installation member 1262. In some embodiments, the installation member 1262 may be generally in a columnar structure. For example, the installation member 1262 may be generally in a cylindrical shape, an elliptical columnar shape, a square columnar shape, a triangular prism, a quadrangular prism, a pentagonal prism, or other shapes. In some embodiments, the shaft hole 1263 may be opened on the end surface of the installation member 1262, for example, the shaft hole 1263 may be opened on the end surface of the installation member 1262 close to the blade 1261. In some embodiments, referring to FIG. 40, the installation member 1262 may have an inner side 122, and the inner side 122 may enclose the above-mentioned shaft hole 1263. In some embodiments, the shaft hole 1263 may be a through-hole structure. For example, the shaft hole 1263 may penetrate two opposite end surfaces of the installation member 1262. In some other embodiments, the shaft hole 1263 may also penetrate one end surface of the installation member 1262. In some embodiments, the shaft hole 1263 may be a non-circular hole. For example, the shaft hole 1263 may be generally an oval hole, a triangular hole, a quadrangular hole, a pentagonal hole, a hexagonal hole, or other shapes.

A through hole 1264 is provided in the radial direction of the installation member 1262. The through hole 1264 is connected with the shaft hole 1263, and the through hole 1264 is convenient for accommodating the locking member 30. In some embodiments, the through hole 1264 may be provided on the side of the installation member 1262. In some embodiments, the installation member 1262 may also have an outer side 124, and the through hole 1264 may penetrate the inner side 122 and the outer side 124.

In some embodiments, the center line of the through hole 1264 and the center line of the shaft hole 1263 may be arranged at an angle. For example, the center line of the through hole 1264 and the center line of the shaft hole 1263 may be substantially perpendicular to each other, and the center line of the through hole 1264 and the center line of the shaft hole 1263 may be inclined to each other within the range of manufacturing errors. For another example, the angle between the center line of the through hole 1264 and the center line of the shaft hole 1263 may be an acute angle, and the angle between the center line of the through hole 1264 and the center line of the shaft hole 1263 may be approximately 89 degrees, 88 degrees, 87 degrees, 86 degrees, 85 degrees, 80 degrees, 75 degrees, 70 degrees, 65 degrees, 60 degrees and so on. For another example, the angle between the center line of the through hole 1264 and the center line of the shaft hole 1263 can be an obtuse angle, and the angle between the center line of the through hole 1264 and the center line of the shaft hole 1263 can be approximately 91 degrees, 92 degrees, 93 degrees, 94 degrees, 95 degrees, 100 degrees, 105 degrees, 110 degrees, 115 degrees, 120 degrees and so on.

In some embodiments, the inner diameter of the through hole 1264 may increase from the inner side 122 toward the outer side 124 of the installation member 1262. For example, the inner diameter of the through hole 1264 may gradually increase from the inner side 122 to the outer side 124, and the through hole 1264 may be generally a tapered hole. For another example, the through hole 1264 may have multiple connected hole segments with different inner diameters. Among the two adjacent hole segments, the inner diameter of the hole segment near the outer side 124 is larger than the inner diameter of the hole segment near the inner side 122. Then the through hole 1264 may generally is step holes, countersunk holes, countersunk holes and other types. For another example, the through hole 1264 may have a first hole segment and a second hole segment that are connected. The first hole segment may penetrate the outer side 124 of the installation member 1262, and the second hole segment may penetrate the inner side 122 of the installation member 1262. The inner diameter of the second hole segment may be smaller than the inner diameter of the first hole segment. Both the first hole section and the second hole section can be hole sections with a constant inner diameter; or, the inner diameter of the first hole section can gradually increase from the second hole section toward the direction of the outer side 124, and the second hole section can have a constant inner diameter. Alternatively, the second hole segment may be a hole segment with a constant inner diameter, and the inner diameter of the second hole segment may gradually increase from the inner surface 122 toward the first hole segment. For another example, the through hole 1264 may have a first hole segment, a second hole segment, and a third hole segment that are connected in sequence. The first hole segment may penetrate the outer side 124 of the installation member 1262, and the third hole segment may penetrate the inner side 122 of the installation member 1262. The inner diameter of the third hole segment may be smaller than the inner diameter of the second hole segment, and the inner diameter of the second hole segment may be smaller than the inner diameter of the first hole segment. The first hole section, the second hole section and the third hole section can all be hole sections with a constant inner diameter; or, the inner diameter of the first hole section can gradually increase from the second hole section toward the direction of the outer side 124, and both the second hole section and the third hole section can be hole sections with a constant inner diameter; alternatively, the inner diameter of the first hole section can gradually increase from the second hole section toward the direction of the outer side 124, the second hole section can have an inner diameter of a constant hole segment, and the inner diameter of the third hole segment may gradually increase from the inner surface 122 toward the second hole segment; or, both the first hole segment and the second hole segment may be hole segments with a constant inner diameter, and the inner diameter of the third hole segment can gradually increase from the inner side 122 toward the second hole segment; or, the first hole segment can be a hole segment with a constant inner diameter, and the inner diameter of the second hole segment can gradually increase from the second hole segment toward the outer side 124, and the third hole section can be a hole section with a constant inner diameter.

In some embodiments, the opening formed by the through hole 1264 penetrating through the outer side 124 may be generally circular, oval, triangular, quadrilateral, pentagonal, hexagonal or other shapes. In some embodiments, the opening formed by the through hole 1264 penetrating through the inner side 122 may be generally circular, oval, triangular, quadrilateral, pentagonal, hexagonal or other shapes.

In some embodiments, the number of through holes 1264 may be multiple, and the plurality of through holes 1264 may be distributed around the center line of the shaft hole 1263; and each through hole 1264 is connected to the shaft hole 1263. In the present application, the term "plurality" means greater than or equal to two. For example, the number of through holes 1264 may be two, three, four, five, six, or other numbers. In some embodiments, when the number of through holes 1264 is multiple, there may be no height difference between the centers of the multiple through holes 1264. For example, in some embodiments, the number of through holes 1264 may be two, and the centers of the two through holes 1264 may be symmetrically distributed about the central axis of the shaft hole 1263. For example, in some embodiments, the number of through holes 1264 may be two, and a line connecting the centers of the two through holes 1264 may be perpendicular to the center line of the shaft hole 1263. For example, in some embodiments, the number of through holes 1264 may be three or more, and a plane passing through the centers of three or more through holes 1264 may be perpendicular to the center line of the shaft hole 1263.

In some embodiments, the blade 1261 may be a metal piece, so that the heating element 132 can conduct the generated heat to the blade 1261, so that the blade 1261 can also generate heat, thus helping to improve the heating effect of the cooking device 20. In other embodiments, blade 1261 may be a plastic piece. In some embodiments, the blade 1261 may be an iron fan. For example, the blade 1261 may be made of pig iron. For example, the blade 1261 may be made of iron alloy such as steel or cast iron. In this way, the processing and shaping of the blade 1261 is facilitated, and the manufacturing difficulty and manufacturing cost of the blade 1261 are simplified. In some embodiments, the blades 1261 may be manufactured using a sheet metal process.

In some embodiments, the installation member 1262 may be a metal piece. In other embodiments, the installation member 1262 may be a plastic piece.

In some embodiments, the fan blade 126 may be an integral structure. For example, the blade 1261 and the installation member 1262 can be integrally formed through a mold. For another example, the blade 1261 and the installation member 1262 can be connected together through threaded connection, gluing, welding, fasteners or other methods after they are respectively formed.

Referring to FIG. 40, the locking member 30 is movably located in the through hole 1264. For example, the locking member 30 can move in the direction of the shaft hole 1263 under the action of an external force. For example, the locking member 30 can move in a direction away from the shaft hole 1263 under the action of an external force, so that the locking member 30 can move close to or away from the shaft hole 1263. In some embodiments, the locking member 30 can be generally spherical, and the locking member 30 is located and rollable in the through hole 1264 so that the locking member 30 can easily move and change its position under the action of external force. In some embodiments, the locking member 30 may be a rigid structure. For example, the locking member 30 may be a metal piece, and the locking member 30 may be a steel ball, copper ball, iron ball or other structure. In some embodiments, the number of the locking member 30 may be one, and the locking member 30 may be located in one of the plurality of through holes 1264. In some embodiments, the number of locking members 30 may be multiple. For example, the number of locking members 30 is consistent with the number of through holes 1264, and each locking member 30 may be located in a corresponding through hole 1264.

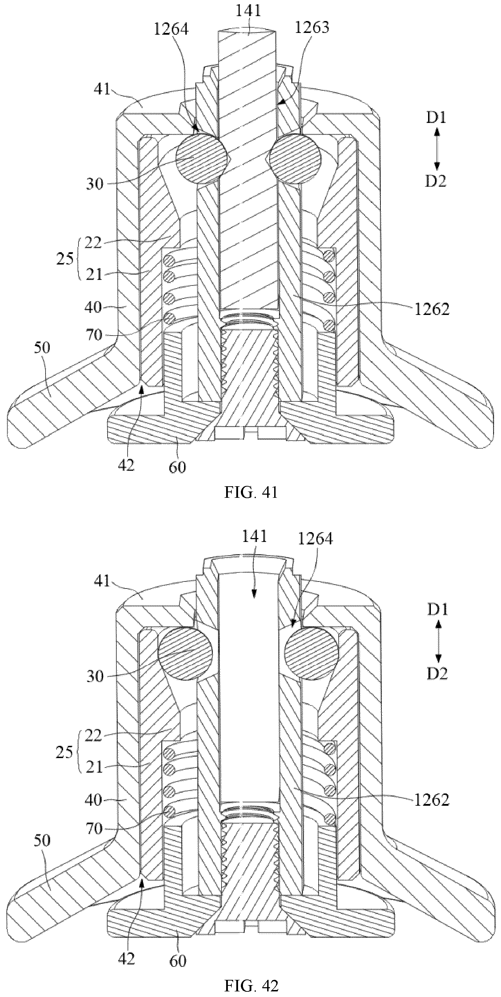

The connection sleeve 25 is movably sleeved on the installation member 1262 along the axial direction of the installation member 1262. The connection sleeve 25 selectively moves to the locking position or the unlocking position along the axial direction of the installation member 1262. As shown in FIG. 40, when the drive shaft 141 of the motor 14 is installed into the shaft hole 1263, the connection sleeve 25 drives the locking member 30 to abut against the drive shaft 141 to be in the locking position, and the locking member 30 can lock the drive shaft 141 and the fan assembly 100. As shown in FIG. 41, the connection sleeve 25 provides the locking member 30 with a radial movement amount away from the drive shaft 141 to be in the unlocking position, which facilitates the removal of the fan assembly 100 from the drive shaft 141. The direction in which the connection sleeve 25 moves from the unlocking position to the locking position is regarded as the locking direction D1, and the direction in which the connection sleeve 25 moves from the locking position to the unlocking position is regarded as the unlocking direction D2.

When the fan assembly 100 needs to be disassembled from the drive shaft 141 of the motor 14, the user can pull the connection sleeve 25 to move the connection sleeve 25 to the unlocking position relative to the fan blade 126 (or installation member 1262) along the unlocking direction D2. Then the locking member 30 loses the abutting force provided by the connection sleeve 25 to the locking member 30 against the drive shaft 141. At this time, the entire fan assembly 100 can slide down under the action of gravity, or the user can increase the strength and pull down the connection sleeve 25 to disengage the shaft hole 1263 of the fan blade 126 (or the installation member 1262) from the drive shaft 141, thereby disassembling the fan assembly 100 from the drive shaft 141, as shown in FIG. 42.

When it is necessary to reassemble the fan assembly 100 to the drive shaft 141 of the motor 14, the user can directly align the shaft hole 1263 of the fan blade 126 (or the installation member 1262) with the drive shaft 141, and then push the entire fan assembly 100 so that the drive shaft 141 is installed into the shaft hole 1263, and the connection sleeve 25 is moved to the locking position relative to the fan blade 126 (or the installation member 1262) along the locking direction D1. At this time, the connection sleeve 25 provides the locking member 30 with the force abutted against the drive shaft 141 of, thereby achieving installation of the fan assembly 100 on the drive shaft 141.

In this way, the connection sleeve 25 can be switched between the locking position and the unlocking position through axial movement, so that the drive shaft 141 and the fan assembly 100 are easy to disassemble and assemble, thereby making it easy to disassemble the fan assembly 100 from the drive shaft 141 for cleaning, which is helpful to simplify the cleaning operation. This improves the problem of being unable to clean due to the inconvenient use of tools for disassembly and assembly in a small space. It also helps the fan assembly 100 and the drive shaft 141 to be quickly connected after the cleaning is completed, thereby making the installation convenient and efficient.

Referring to FIG. 40, when the connection sleeve 25 moves to the locking position, the locking member 30 can be partially located in the shaft hole 1263, so that the locking member 30 can protrude from the through hole 1264 into the shaft hole 1263, which helps to improve the locking ability of the locking member 30 to the drive shaft 141.

In some embodiments, the drive shaft 141 may be provided with a clamping groove 2011, and the clamping groove 2011 may be provided on the outer peripheral surface of the drive shaft 141. When the connection sleeve 25 moves to the locking position, the locking member 30 may be partially located in the clamping groove 2011. In this way, it is helpful to improve the stability of the locking fit between the locking member 30 and the drive shaft 141, so that the fan assembly 100 and the drive shaft 141 are not easily separated from each other.

In some embodiments, the width of the clamping groove 2011 along the axial direction of the drive shaft 141 may be narrowed from the outer peripheral surface of the drive shaft 141 into the drive shaft 141. In this way, after the connection sleeve 25 moves to the unlocking position, it is helpful for the locking member 30 to easily disengage from the clamping groove 2011 of the drive shaft 141 during the process of pulling the fan assembly 100 to disengage the drive shaft 141 from the shaft hole 1263.

In some embodiments, the outer diameter of the locking member 30 may be larger than the minimum diameter of the through hole 1264, which helps to prevent the locking member 30 from deviating from the through hole 1264 from the direction of the inner side 122 of the installation member 1262, thereby helping to ensure the reliability of the removable function of the fan assembly 100.

In some embodiments, the connection sleeve 25 may include a sliding sleeve 21 and a limitation block 22, and the limitation block 22 is provided on the sliding sleeve 21. The sliding sleeve 21 is movably sleeved on the installation member 1262 along the axial direction of the installation member 1262. The limitation block 22 can be protruded from the inner wall 211 of the sliding sleeve 21, and the limitation block 22 can be located between two axial ends of the sliding sleeve 21.

When the connection sleeve 25 is in the locking position, the limitation block 22 can be abutted against the locking member 30; when the connection sleeve 25 is in the unlocking position, the inner wall 211 can be opposite to the locking member 30. In this way, since the limitation block 22 is protruding from the inner wall 211 of the sliding sleeve 21, the distance between the limitation block 22 and the outer peripheral surface of the installation member 1262 is smaller than the distance between the inner wall 211 of the sliding sleeve 21 and the outer peripheral surface of the installation member 1262. The connection sleeve 25 in the locking position abuts against the locking member 30 through the limitation block 22, which helps to increase the radial force on the drive shaft 141, so that the fan assembly 100 does not easily slide off the drive shaft 141. Moreover, the connection sleeve 25 in the unlocking position is opposite to the locking member 30 through the inner wall 211 to help provide a suitable radial movement space for the locking member 30, thereby facilitating the process of the drive shaft 141 disengaging from the shaft hole 1263 of the fan assembly 100, the locking member 30 can move in a direction away from the drive shaft 141 under the contact of the drive shaft 141, which helps to avoid obstruction to the drive shaft 141.

In some embodiments, the sliding sleeve 21 may be generally annular. In some embodiments, the distance between the inner wall 211 of the sliding sleeve 21 and the installation member 1262 may be smaller than the outer diameter of the locking member 30. In this way, when the connection sleeve 25 is in the unlocking position, it helps to prevent the locking member 30 from escaping from the through hole 1264 from the direction of the outer side 124 of the installation member 1262.

In some embodiments, the limitation block 22 may be generally annular. In some embodiments, the limitation block 22 may have a limitation surface 221, and the limitation surface 221 of the connection sleeve 25 in the locking position abuts against the locking member 30.

The distance between the limitation surface 221 and the outer peripheral surface of the installation member 1262 increases along the locking direction D1, so that the limitation surface 221 is tilted, thereby facilitating that the locking member 30 is abutted against the drive shaft 141 under the pushing action of the limitation surface 221 in the process of the connection sleeve 25 moving from the unlocking position to the locking position, which helps to avoid the blocking of the limitation block 22 and the locking member 30 during the locking process of the connection sleeve 25.

In some embodiments, the longitudinal section of the limitation block 22 at the limitation surface 221 may be substantially oblique, so that the limitation surface 221 may be substantially a tapered surface. In some embodiments, the longitudinal section of the limitation block 22 at the limitation surface 221 may be substantially arcuate, so that the limitation surface 221 may be substantially spherical. In some embodiments, the limitation block 22 and the sliding sleeve 21 may be an integral structure. For example, the limitation block 22 and the sliding sleeve 21 can be integrally formed by a mold. For another example, the limitation block 22 and the sliding sleeve 21 can be connected together through threaded connection, gluing, welding, fasteners or other methods after being formed respectively.

In some embodiments, the fan assembly 100 may further include a handle 40. The handle 40 may be placed outside the connection sleeve 25. For example, the handle 40 may be placed outside the sliding sleeve 21. The handle 40 facilitates the user to operate the fan assembly 100. In other embodiments, the fan assembly 100 may not be provided with the handle 40, and the user may directly operate the fan assembly 100 by holding the outer peripheral surface of the connection sleeve 25.

In some embodiments, the handle 40 may have a limitation end surface 41 and an opening 42, and the limitation end surface 41 and the opening 42 are opposite. The limitation end surface 41 may face the blade 1261, and the opening 42 may face away from the blade 1261. The direction from the limitation end surface 41 toward the opening 42 can be the unlocking direction D2. In this way, when the user pulls the handle 40 in the unlocking direction D2, the limitation end surface 41 of the handle 40 can abut against the sliding sleeve 21 and drive the connection sleeve 25 to move; when the connection sleeve 25 moves to the unlocking position, the limitation end surface 41 can also block the locking member 30, which helps to prevent the locking member 30 from detaching from the sliding sleeve 21 when the user pulls the handle 40 with excessive force.

In some embodiments, the handle 40 and the connection sleeve 25 can be fixedly connected through interference fit. The handle 40 and the connection sleeve 25 can also be fixedly connected through glue. In other embodiments, the handle 40 and the connection sleeve 25 can also be fixed in other ways.

In some embodiments, the fan assembly 100 may further include a cover body 50, which may be connected to a side of the handle 40 facing away from the blades 1261, and the outer diameter of the cover body 50 may expand in a direction away from the handle 40. In this way, the cover body 50 can provide support and limit for the user's hand, making it convenient for the user to prevent the user from slipping and being unable to grasp the handle 40 when pulling the handle 40. In addition, since the outer diameter of the cover body 50 expands in the direction away from the handle 40, it is avoided to design the cover body 50 into an upward-turned structure (that is, the outer diameter of the cover body 50 extends from the opening 42 of the handle 40 toward the limitation end surface of the handle 40 41), causing e-liquid to accumulate at the connection between the cover body 50 and the handle 40.

In some embodiments, the cover body 50 and the handle 40 may be an integral structure. For example, the cover body 50 and the handle 40 can be integrally formed by a mold. For another example, the cover body 50 and the handle 40 can be connected together through threaded connection, gluing, welding, fasteners or other methods after they are respectively formed.

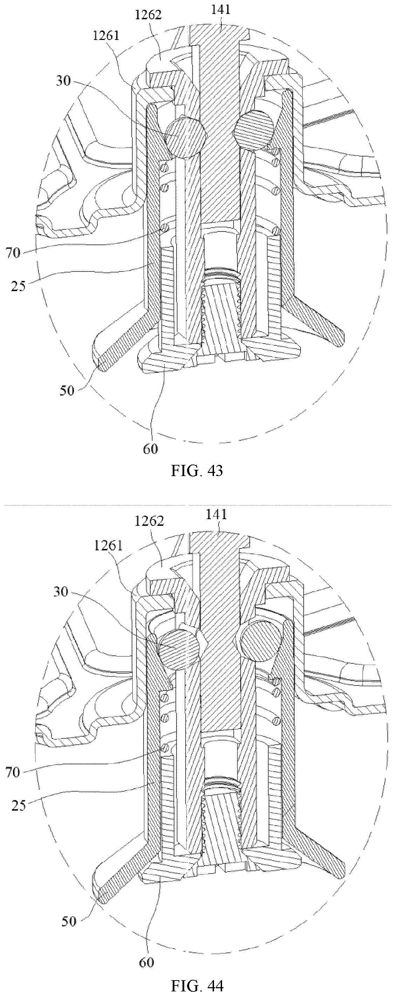

In some embodiments, the fan assembly 100 can also connect the cover body 50 to the connection sleeve 25 without adding a handle 40. For example, referring to FIGS. 43 and 44, the cover body 50 can be connected to the side of the connection sleeve 25 away from the blade 1261, and the outer diameter of the cover body 50 expands in the direction away from the connection sleeve 25. In this way, the cover body 50 can also provide support and limit for the user's hand, so that when the user pulls the connection sleeve 25, it is not easy for the user to slip and fail to grasp the connection sleeve 25. In addition, since the outer diameter of the cover body 50 expands in the direction away from the connection sleeve 25, it is avoided that the cover body 50 is designed to be an upward structure, which causes e-liquid to accumulate at the connection between the cover body 50 and the connection sleeve 25.

In some embodiments, the cover body 50 and the connection sleeve 25 may be an integral structure. For example, the cover body 50 and the connection sleeve 25 can be integrally formed by a mold. For another example, the cover body 50 and the connection sleeve 25 can be connected together through threaded connection, gluing, welding, fasteners or other methods after being formed separately.

Referring to FIG. 42 or 43, in some embodiments, the fan assembly 100 may further include a limitation member 60 and an elastic return member 70. The limitation member 60 may be connected to the end of the installation member 1262 away from the blade 1261. The elastic return member 70 can offset between the connection sleeve 25 and the limitation member 60.

The elastic return member 70 may be adapted to provide elastic force along the locking direction D1 for the connection sleeve 25 so that the connection sleeve 25 can remain in the locking position, which helps to improve the stability of the connection between the fan assembly 100 and the drive shaft 141. In addition, the limitation member 60 can provide support for the user's fingers. For example, when the fan assembly 100 needs to be removed from the drive shaft 141, the user can press the limitation member 60 with his thumb, and the index finger and middle finger can pinch the handle 40 or the cover body 50 and pull down hard, so that the connection sleeve 25 can be moved to the unlocking position more conveniently.

In some embodiments, the elastic return member 70 may be a spring. For example, the elastic return member 70 may be a compression spring, and the elastic return member 70 may be in a compressed state. The degree of pressure of the elastic return member 70 when the connection sleeve 25 is in the unlocking position may be greater than the degree of pressure when the connection sleeve 25 is in the locking position.

In some embodiments, the limitation member 60 can be partially inserted into the connection sleeve 25. For example, the limitation member 60 can be partially inserted into the sliding sleeve 21, which helps to prevent oil smoke from entering the sliding sleeve 21, and helps to reduce the accumulation of oil dirt that affects the normal operation of the locking member 30, the elastic return member 70 and other structures.

In some embodiments, a user or worker may assemble fan assembly 100 according to the following process. For example, referring to FIG. 38, the user or worker can first align the limitation end surface 41 of the handle 40 with the installation member 1262 of the fan body, and then set the handle 40 outside the installation member 1262; and then the locking member 30 is placed at the through hole 1264 from the outer side 124 of the installation member 1262; and then the connection sleeve 25 is placed outside the installation member 1262 and inside the handle 40; the end of the connection sleeve 25 is abutted against the limitation end surface 41 of the handle 40, and the connection sleeve 25 surrounds the locking member 30; then the elastic return member 70 is installed into the connection sleeve 25, and one end of the elastic return member 70 is abutted against the limitation block 22 of the connection sleeve 25; and finally the limitation member 60 is connected to the end of the installation member 1262 away from the blade 1261, making the limitation member 60 abut against the other end of the elastic return member 70, thus completing the assembly of the fan assembly 100.

In some embodiments, during the above process of assembling the fan assembly 100, the user or worker can also assemble it upside down. The three assemblies of the handle 40, the locking member 30, and the connection sleeve 25 can be turned upside down first and assembled into an integrated structure, and then they can be assembled into an integrated structure. The integrated structure is placed outside the installation member 1262 of the fan body and the locking member 30 is placed at the through hole 1264. Finally, the elastic return member 70 and the limitation member 60 are assembled in sequence.

The fan assembly 100 provided in any of the above embodiments of the present application can be applied not only to the cooking device 20 but also to other products that require a detachable fan. For example, the fan assembly 100 can also be applied to an electric fan.

Please refer to FIGS. 7, 37 and 38 together. The fan blade 126 of the fan assembly 100 are provided toward the inside of the cooking cavity 111 and the inner pot 114. The fan blade 126 rotate under the drive of the motor 14 and promote the air flow inward, so as to form positive pressure inside the inner pot 114.

In some embodiments, the depth of the inner pot 114 is defined as h. The fan assembly 100 is located in the cooking cavity 111, and the diameter of the fan blade 126 is d; where d and h satisfy the relationship: d/h≤2. The present application does not impose specific restrictions on the sizes of the inner pot 114 and the fan blade 126, as long as each part of the structure can be installed and cooperate with each other. The type of fan assembly 100 in the present application is configured to correspond to the motor 14. In this embodiment, the fan blade 126 is selected as the fan assembly 100 according to the rotation driving mode of the motor 14. If the motor 14 in some other embodiments is a swing driving element, then a structure such as a wind plate is selected as the fan assembly 100 corresponding to the swing driving mode.

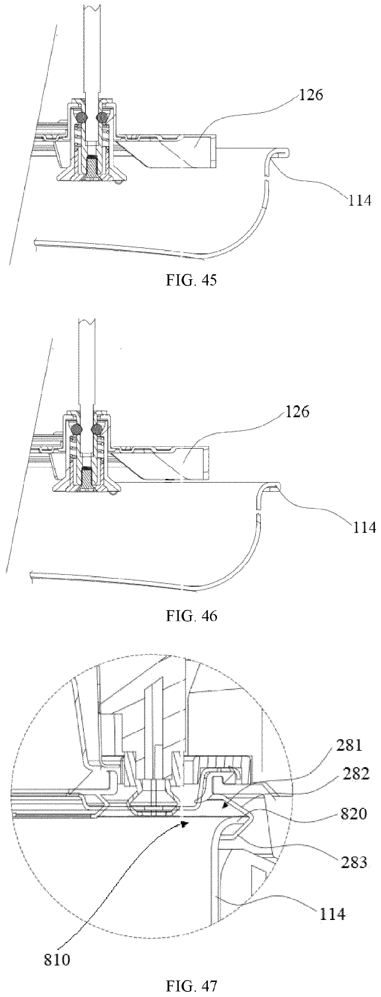

The present application does not specifically limit the relative positional relationship between the inner pot 114 and the fan blade 126. The fan blade 126 can be located above the opening 810 of the inner pot 114, or at the opening 810 of the inner pot 114, as shown in FIG. 45. In this embodiment, the fan blade 126 is provided at the opening 810 of the inner pot 114. Specifically, when projected to the plane where the rotation axis of the fan blade 126 is located, the projected outline of the blade 1261 of the fan blade 126 is partially located outside the projected outline of the inner pot 114 and partially located within the projected outline of the inner pot 114, so that the air outlet side 4121 of the blade 1261 is located inside the inner pot 114 and slightly lower than the opening 810.

In some other embodiments, as shown in FIG. 46, when projected to the plane where the rotation axis of the fan blade 126 is located, the projected outline of the blade 1261 is entirely outside the projected outline of the inner pot 114, so that the air outlet side 4121 of the blade 1261 is located outside the inner pot 114 and slightly higher than the opening 810. In the present application, the air outlet side 4121 is arranged near the opening 810, which can not only prevent the blade 1261 from sticking to the soup in the inner pot 114, but also ensure that most of the airflow driven by the fan blade 126 is directed into the interior of the inner pot 114 to form a positive pressure.

Please refer to FIG. 7 and FIG. 47 together. The cooking device 20 may also include an inner pot sealing ring 28. The inner pot sealing ring 28 is located on the side of the pot body 11 facing the cooking cavity 111. The inner pot sealing ring 28 is arranged around and used to seal the edge of the opening 810 of the inner pot 114, so that the inside of the inner pot 114 is in a sealed state to meet the conditions for cooking ingredients.

For example, the edge of the opening 810 of the inner pot 114 is provided with a protruding portion 820. The protruding portion 820 is connected to the edge of the opening 810, and the protruding portion 820 protrudes relative to the edge of the opening 810 in a direction away from the center of the opening 810. The inner pot sealing ring 28 is provided with a sealing groove 281, and the sealing groove 281 is arranged around. In some embodiments, the inner pot sealing ring 28 includes a first sealing portion 282 and a second sealing portion 283. The first sealing part 282 and the second sealing part 283 are both circumferentially arranged, and both have a certain width in the radial direction. It can be understood that the first sealing part 282 and the second sealing part 283 are in the form of a flat annular body. The outer edge of the first sealing portion 282 and the outer edge of the second sealing portion 283 are close to and connected to each other, while the inner edge of the first sealing portion 282 and the inner edge of the second sealing portion 283 are away from each other, so that the above sealing groove 281 is formed between the first sealing portion 282 and the second sealing part 283.

In some specific assembly situations, the inner pot sealing ring 28 gradually approaches the protruding portion 820 of the inner pot 114. After the protruding portion 820 contacts the second sealing portion 283, the protruding portion 820 squeezes the second sealing portion 283. The second sealing portion 283 is deformed so that the protruding portion 820 enters the sealing groove 281 and is embedded in the sealing groove 281. In some embodiments, the material of the inner pot sealing ring 28 may be silicone or other elastic materials that meet food safety requirements.

In summary, the cooking device 20 provided by the embodiment of the present application includes a pot body 11, a heating element 132 and a panel 131. The pot body 11 is provided with a cooking cavity 111 and an installation cavity 112. The heating element 132 is located in the installation cavity 112. The panel 131 is assembled on the pot body 11 and separates the cooking cavity 111 and the installation cavity 112. In this way, the panel 131 separates the cooking cavity 111 and the installation cavity 112, so that the panel 131 can separate the cooking cavity 111 and the heating element 132, which helps to prevent the oil smoke in the cooking cavity 111 from adhering to the heating element 132, and helps to prevent the oil smoke from affecting the normal operation of the heating element 132. In addition, the panel 131 separating the cooking cavity 111 and the installation cavity 112 also helps to reduce the structure of the cooking device 20 that needs to be cleaned, and helps to facilitate the cleaning of the cooking device 20.

In the present application, unless otherwise expressly stated or limited, the terms "assembly" and other terms are to be construed broadly. For example, it can be a fixed connection, a detachable connection, or an integrated connection; it can be a mechanical connection; it can be a direct connection, or it can be an indirect connection through an intermediate medium; it can also be an internal connection between two assemblies, or it can only be a surface contact, or surface contact connection through an intermediate medium. For those skilled in the art, the specific meanings of the above terms in the present application can be understood according to specific circumstances.

In addition, the terms "first", "second", etc. are only used to differentiate the description and cannot be understood as specific designations or special structures. Description of the term "some embodiments" means that a particular feature, structure, material or characteristic described in connection with the embodiment or example is included in at least one embodiment or example of the present application. In the present application, the schematic expressions of the above terms are not necessarily directed to the same embodiment or example. Furthermore, the specific features, structures, materials or characteristics described may be combined in any suitable manner in any one or more embodiments or examples. Furthermore, those skilled in the art may combine the different embodiments or examples described in the present application and the features of different embodiments or examples unless they are inconsistent with each other

## Claims

1. A cooking device (20), **characterized by**:
a pot body (11) provided with a cooking cavity (111) and an installation cavity (112);
a heating element (132) located in the installation cavity (112); and
a panel (131) assembled on the pot body (11) and configured to separate the cooking cavity (111) and the installation cavity (112);
a motor (14), the motor (14) is installed in the installation cavity (112),
**characterised in that** the cooking device (20) is provided with a cooking exhaust channel (201) and a first heat dissipation channel (202) independent of the cooking exhaust channel (201);
the cooking exhaust channel (201) is provided with a cooking air inlet (201a) and a cooking exhaust port (201b), and the cooking air inlet (201a) is connected to the cooking cavity (111);
the first heat dissipation channel (202) is provided with a first heat dissipation air inlet (202a) and a first heat dissipation exhaust port (202b); and
the first heat dissipation air inlet (202) is connected to the installation cavity (112), and the first heat dissipation exhaust port (202b) is not connected to the cooking exhaust port (201b);
the cooking device further comprises a heat shield (300), and a reflective cover (400), the reflective cover (400) and the heat shield (300) are enclosed to form a heat insulation space (104), the reflective cover (400) is located between the installation cavity (112) and the heat insulation space (104), the heat shield (300) is located between the heat insulation space (104) and the cooking cavity (111), the heating element (132) is located on a side of the heat shield (300) away from the heat insulation space (104) and opposite to the cooking cavity (111); and
the cooking device (20) is provided with a second heat dissipation channel (203), the second heat dissipation channel (203) and the cooking exhaust channel (201) are independent of each other, the second heat dissipation channel (203) is provided with a second heat dissipation air inlet (203a) and a second heat dissipation exhaust port (203b), the second heat dissipation air inlet (203a) is connected to the heat insulation space (104), and the second heat dissipation exhaust port (203b) is not connected to the cooking exhaust port (201b).

2. The cooking device (20) according to claim 1, further comprising a fan blade (126) wherein:
the fan blade (126) is located on a side of the panel (131) facing the cooking cavity (111);
a main body (142) of the motor (14) is located in the installation cavity (112);
a drive shaft (141) of the motor (14) is configured to passe through the panel (131) and is connected to the fan blade (126); and
the heating element (132) is located between the main body (142) of the motor (14) and the panel (131).

3. The cooking device (20) according to claim 2, wherein the panel (131) is made of glass-ceramics, and the heating element (132) is a light wave tube, and
wherein preferably:
the panel (131) is spaced apart from the heating element (132); and
a minimum distance between the panel (131) and the heating element (132) is 0.5 mm to 15 mm.

4. The cooking device (20) according to claim 2, further comprising a bracket (121), wherein:
the bracket (121) is provided with a first through hole (1211);
the first through hole (1211) is opposite to the cooking cavity (111); and
the panel (131) is mounted on the bracket (121) and provided on the first through hole (1211).

5. The cooking device according to claim 4, wherein:
the bracket (121) is provided with a first annular rim (1213);
the first annular rim (1213) is configured to surround an outer periphery of the first through hole (1211) and protrude from one side of the bracket (121) facing the panel (131); and
the panel (131) is abutted against the first annular rim (1213).

6. The cooking device according to claim 5, wherein a width of the first annular rim (1213) protruding from the first through hole (1211) is 0.5 mm to 10 mm.

7. The cooking device according to claim 4, wherein:
the bracket (121) is further provided with a second through hole (1212);
the second through hole (1212) is opposite to the cooking cavity (111) and is spaced apart from the first through hole (1211);
the cooking device (20) further comprises a perspective plate (123); and
the perspective plate (123) is installed on the bracket (121) and provided on the second through hole (1212).

8. The cooking device (20) according to claim 1, wherein the cooking device (20) further comprises an exhaust part (200), and the cooking exhaust channel (201) and the first heat dissipation channel (202) are integrated in the exhaust part (200).

9. The cooking device (20) according to claim 1, wherein:
the reflective cover (400) is located in the installation cavity (112); the reflective cover (400) is provided on the heating element (132), and an opening of the reflective cover (400) is configured to face the cooking cavity (111); and
the reflective cover (400) is provided with a protrusion (1232) on a side facing the cooking cavity (111), and the protrusion (1232) is provided with a reflective side (1233); the reflective side (1233) is configured to face the cooking cavity (111), and the heating element (132) is configured to surround the reflective side (1233).

10. The cooking device (20) according to claim 1, further comprising:
a heat shield (300) covering on the heating element (132); and
a heat insulation assembly (18),
wherein:
the motor (14) is located on a side of the heat shield (300) away from the heating element (132);
a drive shaft (141) of the motor (14) is configured to pass through the heat shield (300); and
the heat insulation assembly (18) is sleeved on an outer periphery of the drive shaft (141).

11. The cooking device (20) according to claim 1, further comprising:
a cover plate (31) assembled to the pot body (11) and provided with a perspective portion (311);
a perspective plate (123) located between the cover plate (31) and the cooking cavity (111), wherein the perspective portion (311) and the perspective plate (123) are configured to define a perspective channel (312) along a height direction (Y) of the cooking device (20); and
a heat insulation portion (313) located between the cover plate (31) and the cooking cavity (111), wherein the heating element (132) is located in the heat insulation portion (313) and opposite to the cooking cavity (111), and the heat insulation portion (313) is configured to separate the heating element (132) with the perspective channel (312).

12. The cooking device (20) according to claim 2, further comprising a fan assembly (100) located within the cooking cavity (111), wherein:
the fan assembly (100) is removably assembled to a drive shaft (141) of the motor (14);
the fan assembly (100) comprises the fan blade (126), a connection sleeve (25) and a locking member (30);
the fan blade (126) comprises a blade (1261) and an installation member (1262) connected to the blade (1261);
the installation member (1262) is axially provided with a shaft hole (1263) suitable for accommodating the drive shaft (141) of the motor (14);
the installation member (1262) is provided with a through hole (1264) communicated with the shaft hole (1263) in a radial direction;
the connection sleeve (25) is movably sleeved on the installation member (1262) along an axial direction of the installation member (1262);
the locking member (30) is movably located in the through hole (1264);
the connection sleeve (25) is selectively moved to a locking position or an unlocking position along the axial direction of the installation member (1262);
when the drive shaft (141) is installed into the shaft hole (1263), the connection sleeve (25) is configured to drive the locking member (30) abut against the drive shaft (141) to be in the locking position, and the connection sleeve (25) is configured to provide the locking member (30) with a radial movement amount away from the drive shaft (141) to be in the unlocking position.

13. The cooking device (20) according to claim 1, further comprising:
an inner pot (114) provided in the cooking cavity (111), wherein a depth of the inner pot (114) is h;
wherein a main body (142) of the motor (14) is located on a side of the panel (131) away from the cooking cavity (111), and a drive shaft (141) of the motor (14) is configured to pass through the panel (131); and
a fan assembly (100) located in the cooking cavity (111) and detachably assembled on the drive shaft (141) of the motor (14),
wherein:
the fan assembly (100) comprises a fan blade (126);
a diameter of the fan blade (126) is d; and
d and h satisfy a relationship: d/h≤2.

## Patentansprüche

1. Garvorrichtung (20), **gekennzeichnet durch**:
einen Topfhauptteil (11) mit einem Garhohlraum (111) und einem Installationshohlraum (112),
ein Heizelement (132), das sich in dem Installationshohlraum (112) befindet, und
eine Platte (131), die an dem Topfhauptteil (11) angebracht und so konfiguriert ist, dass sie den Garhohlraum (111) und den Installationshohlraum (112) trennt,
einen Motor (14), wobei der Motor (14) in dem Installationshohlraum (112) installiert ist, **dadurch gekennzeichnet, dass** die Garvorrichtung (20) mit einem Garabluftkanal (201) und einem von dem Garabluftkanal (201) unabhängigen ersten Wärmeableitkanal (202) versehen ist,
der Garabluftkanal (201) mit einem Garlufteinlass (201a) und einer Garluftaustrittsöffnung (201b) versehen und der Garlufteinlass (201a) mit dem Garhohlraum (111) verbunden ist, der erste Wärmeableitkanal (202) mit einem ersten Wärmeableitlufteinlass (202a) und einer ersten Wärmeableitaustrittsöffnung (202b) versehen ist und
der erste Wärmeableitlufteinlass (202) mit dem Installationshohlraum (112) verbunden und die erste Wärmeableitaustrittsöffnung (202b) nicht mit der Garluftaustrittsöffnung (201b) verbunden ist,
die Garvorrichtung ferner einen Wärmeschutzschirm (300) und einen reflektierenden Deckel (400) umfasst, wobei der reflektierende Deckel (400) und der Wärmeschutzschirm (300) umschlossen sind und so einen Wärmeisolierraum (104) bilden, sich der reflektierende Deckel (400) zwischen dem Installationshohlraum (112) und dem Wärmeisolierraum (104), sich der Wärmeschutzschirm (300) zwischen dem Wärmeisolierraum (104) und dem Garhohlraum (111) und sich das Heizelement (132) auf einer Seite des Wärmeschutzschirms (300) befindet, die von dem Wärmeisolierraum (104) abgewandt ist und dem Garhohlraum (111) gegenüberliegt, und
die Garvorrichtung (20) mit einem zweiten Wärmeableitkanal (203) versehen ist, wobei der zweite Wärmeableitkanal (203) und der Garabluftkanal (201) voneinander unabhängig sind, der zweite Wärmeableitkanal (203) mit einem zweiten Wärmeableitlufteinlass (203a) und einer zweiten Wärmeableitaustrittsöffnung (203b) versehen ist, der zweite Wärmeableitlufteinlass (203a) mit dem Wärmeisolierraum (104) verbunden und die zweite Wärmeableitaustrittsöffnung (203b) nicht mit der Garluftaustrittsöffnung (201b) verbunden ist.

2. Garvorrichtung (20) nach Anspruch 1, die ferner einen Gebläseflügel (126) umfasst, wobei:
sich der Gebläseflügel (126) auf einer zum Garhohlraum (111) weisenden Seite der Platte (131) befindet,
sich ein Hauptteil (142) des Motors (14) in dem Installationshohlraum (112) befindet,
eine Antriebswelle (141) des Motors (14) so konfiguriert ist, dass sie durch die Platte (131) hindurch verläuft und mit dem Gebläseflügel (126) verbunden ist und
sich das Heizelement (132) zwischen dem Hauptteil (142) des Motors (14) und der Platte (131) befindet.

3. Garvorrichtung (20) nach Anspruch 2, wobei die Platte (131) aus Glaskeramik hergestellt ist und es sich bei dem Heizelement (132) um einen Lichtwellenleiter handelt und wobei vorzugsweise:
die Platte (131) von dem Heizelement (132) beabstandet ist und
ein Mindestabstand zwischen der Platte (131) und dem Heizelement (132) 0,5 mm bis 15 mm beträgt.

4. Garvorrichtung (20) nach Anspruch 2, die ferner eine Halterung (121) umfasst, wobei:
die Halterung (121) mit einer ersten Durchbrechung (1211) versehen ist,
die erste Durchbrechung (1211) dem Garhohlraum (111) gegenüberliegt und
die Platte (131) an der Halterung (121) angebracht und an der ersten Durchbrechung (1211) vorgesehen ist.

5. Garvorrichtung nach Anspruch 4, wobei:
die Halterung (121) mit einer ersten ringförmigen Randlippe (1213) versehen ist,
die erste ringförmige Randlippe (1213) so konfiguriert ist, dass sie einen Außenrand der ersten Durchbrechung (1211) umgibt und von einer zur Platte (131) weisenden Seite der Halterung (121) vorsteht, und
die Platte (131) an der ersten ringförmigen Randlippe (1213) anliegt.

6. Garvorrichtung nach Anspruch 5, wobei eine Breite der von der ersten Durchbrechung (1211) vorstehenden ersten ringförmigen Randlippe (1213) 0,5 mm bis 10 mm beträgt.

7. Garvorrichtung nach Anspruch 4, wobei:
die Halterung (121) ferner mit einer zweiten Durchbrechung (1212) versehen ist,
die zweite Durchbrechung (1212) dem Garhohlraum (111) gegenüberliegt und von der ersten Durchbrechung (1211) beabstandet ist,
die Garvorrichtung (20) ferner eine Sichtscheibe (123) umfasst und
die Sichtscheibe (123) an der Halterung (121) installiert und an der zweiten Durchbrechung (1212) vorgesehen ist.

8. Garvorrichtung (20) nach Anspruch 1, wobei die Garvorrichtung (20) ferner einen Abluftteil (200) umfasst und der Garabluftkanal (201) und der erste Wärmeableitkanal (202) in den Abluftteil (200) integriert sind.

9. Garvorrichtung (20) nach Anspruch 1, wobei:
sich der reflektierende Deckel (400) in dem Installationshohlraum (112) befindet, wobei der reflektierende Deckel (400) an dem Heizelement (132) vorgesehen und eine Öffnung des reflektierenden Deckels (400) so konfiguriert ist, dass sie zum Garhohlraum (111) weist, und der reflektierende Deckel (400) auf einer zum Garhohlraum (111) weisenden Seite mit einem Vorsprung (1232) und der Vorsprung (1232) mit einer reflektierenden Seite (1233) versehen ist, wobei die reflektierende Seite (1233) so konfiguriert ist, dass sie zum Garhohlraum (111) weist, und das Heizelement (132) so konfiguriert ist, dass es die reflektierende Seite (1233) umgibt.

10. Garvorrichtung (20) nach Anspruch 1, die ferner Folgendes umfasst:
einen Wärmeschutzschirm (300), der das Heizelement (132) bedeckt, und
eine Wärmeisolierbaugruppe (18),
wobei:
sich der Motor (14) auf einer dem Heizelement (132) abgewandten Seite des Wärmeschutzschirms (300) befindet,
eine Antriebswelle (141) des Motors (14) so konfiguriert ist, dass sie durch den Wärmeschutzschirm (300) hindurch verläuft, und
die Wärmeisolierbaugruppe (18) auf einen Außenrand der Antriebswelle (141) gesteckt ist.

11. Garvorrichtung (20) nach Anspruch 1, die ferner Folgendes umfasst:
eine Abdeckplatte (31), die an den Topfhauptteil (11) montiert und mit einem Sichtabschnitt (311) versehen ist,
eine Sichtscheibe (123), die sich zwischen der Abdeckplatte (31) und dem Garhohlraum (111) befindet, wobei der Sichtabschnitt (311) und die Sichtscheibe (123) so konfiguriert sind, dass sie in Höhenrichtung (Y) der Garvorrichtung (20) einen Sichtkanal (312) definieren, und
einen Wärmeisolierabschnitt (313), der sich zwischen der Abdeckplatte (31) und dem Garhohlraum (111) befindet, wobei sich das Heizelement (132) in dem Wärmeisolierabschnitt (313) und gegenüber dem Garhohlraum (111) befindet und der Wärmeisolierabschnitt (313) so konfiguriert ist, dass er das Heizelement (132) von dem Sichtkanal (312) trennt.

12. Garvorrichtung (20) nach Anspruch 2, die ferner eine Gebläsebaugruppe (100) umfasst, die sich in dem Garhohlraum (111) befindet, wobei:
die Gebläsebaugruppe (100) lösbar an eine Antriebswelle (141) des Motors (14) montiert ist,
die Gebläsebaugruppe (100) den Gebläseflügel (126), eine Verbindungshülse (25) und ein Arretierelement (30) umfasst,
der Gebläseflügel (126) einen Flügel (1261) und ein mit dem Flügel (1261) verbundenes Installationselement (1262) umfasst,
das Installationselement (1262) axial mit einem Wellenloch (1263) versehen ist, das sich zum Aufnehmen der Antriebswelle (141) des Motors (14) eignet,
das Installationselement (1262) mit einer Durchbrechung (1264) versehen ist, die in radialer Richtung mit dem Wellenloch (1263) verbunden ist,
die Verbindungshülse (25) in axialer Richtung des Installationselements (1262) beweglich auf das Installationselement (1262) gesteckt ist,
das Arretierelement (30) beweglich in der Durchbrechung (1264) angeordnet ist,
die Verbindungshülse (25) in axialer Richtung des Installationselements (1262) gezielt in eine Arretierposition oder eine Entarretierposition bewegt wird,
die Verbindungshülse (25) so konfiguriert ist, dass sie, wenn die Antriebswelle (141) in dem Wellenloch (1263) installiert ist, das Arretierelement (30) zum Anliegen an der Antriebswelle (141) bringt, so dass sie sich in der Arretierposition befindet, und die Verbindungshülse (25) so konfiguriert ist, dass sie das Arretierelement (30) um einen radialen Bewegungsbetrag von der Antriebswelle (141) weg bewegt, so dass sie sich in der Entarretierposition befindet.

13. Garvorrichtung (20) nach Anspruch 1, die ferner Folgendes umfasst:
einen im Garhohlraum (111) vorgesehenen Innentopf (114), wobei eine Tiefe des Innentopfes (114) h ist,
wobei sich ein Hauptteil (142) des Motors (14) auf einer von dem Garhohlraum (111) weg weisenden Seite der Platte (131) befindet und eine Antriebswelle (141) des Motors (14) so konfiguriert ist, dass sie durch die Platte (131) hindurch verläuft, und
eine Gebläsebaugruppe (100), die sich in dem Garhohlraum (111) befindet und abnehmbar an der Antriebswelle (141) des Motors (14) angebracht ist,
wobei:
die Gebläsebaugruppe (100) einen Gebläseflügel (126) umfasst,
ein Durchmesser des Gebläseflügels (126) d ist und
d und h einem Verhältnis d/h≤2 entsprechen.

## Revendications

1. Dispositif de cuisson (20), **caractérisé par** :
un corps de récipient (11) doté d'une cavité de cuisson (111) et d'une cavité d'installation (112) ;
un élément chauffant (132) situé dans la cavité d'installation (112) ; et
un panneau (131) assemblé sur le corps de récipient (11) et configuré pour séparer la cavité de cuisson (111) et la cavité d'installation (112) ;
un moteur (14), le moteur (14) est installé dans la cavité d'installation (112),
**caractérisé en ce que** le dispositif de cuisson (20) est doté d'un canal d'évacuation de cuisson (201) et d'un premier canal de dissipation de chaleur (202) indépendant par rapport au canal d'évacuation de cuisson (201) ;
le canal d'évacuation de cuisson (201) est doté d'une entrée d'air de cuisson (201a) et d'un orifice d'évacuation de cuisson (201b), et l'entrée d'air de cuisson (201a) est raccordée à la cavité de cuisson (111) ;
le premier canal de dissipation de chaleur (202) est doté d'une première entrée d'air de dissipation de chaleur (202a) et d'un premier orifice d'évacuation de dissipation de chaleur (202b) ; et
la première entrée d'air de dissipation de chaleur (202) est raccordée à la cavité d'installation (112), et le premier orifice d'évacuation de dissipation de chaleur (202b) n'est pas raccordé à l'orifice d'évacuation de cuisson (201b) ;
le dispositif de cuisson comporte par ailleurs un écran thermique (300) et un couvercle réfléchissant (400), le couvercle réfléchissant (400) et l'écran thermique (300) sont enfermés pour former un espace d'isolation thermique (104), le couvercle réfléchissant (400) est situé entre la cavité d'installation (112) et l'espace d'isolation thermique (104), l'écran thermique (300) est situé entre l'espace d'isolation thermique (104) et la cavité de cuisson (111), l'élément chauffant (132) est situé sur un côté de l'écran thermique (300) à distance de l'espace d'isolation thermique (104) et à l'opposé de la cavité de cuisson (111) ; et
le dispositif de cuisson (20) est doté d'un deuxième canal de dissipation de chaleur (203), le deuxième canal de dissipation de chaleur (203) et le canal d'évacuation de cuisson (201) sont indépendants l'un par rapport à l'autre, le deuxième canal de dissipation de chaleur (203) est doté d'une deuxième entrée d'air de dissipation de chaleur (203a) et d'un deuxième orifice d'évacuation de dissipation de chaleur (203b), la deuxième entrée d'air de dissipation de chaleur (203a) est raccordée à l'espace d'isolation thermique (104), et le deuxième orifice d'évacuation de dissipation de chaleur (203b) n'est pas raccordé à l'orifice d'évacuation de cuisson (201b).

2. Dispositif de cuisson (20) selon la revendication 1, comportant par ailleurs une pale de ventilateur (126), dans lequel :
la pale de ventilateur (126) est située sur un côté du panneau (131) faisant face à la cavité de cuisson (111) ;
un corps principal (142) du moteur (14) est situé dans la cavité d'installation (112) ;
un arbre d'entraînement (141) du moteur (14) est configuré pour passer au travers du panneau (131) et est raccordé à la pale de ventilateur (126) ; et
l'élément chauffant (132) est situé entre le corps principal (142) du moteur (14) et le panneau (131).

3. Dispositif de cuisson (20) selon la revendication 2, dans lequel le panneau (131) est réalisé en vitrocéramique, et l'élément chauffant (132) est un tube à ondes lumineuses, et
dans lequel de préférence :
le panneau (131) est espacé de l'élément chauffant (132) ; et
une distance minimale entre le panneau (131) et l'élément chauffant (132) va de 0,5 mm à 15 mm.

4. Dispositif de cuisson (20) selon la revendication 2, comportant par ailleurs un support (121), dans lequel :
le support (121) est doté d'une premier trou traversant (1211) ;
le premier trou traversant (1211) est situé à l'opposé de la cavité de cuisson (111) ; et
le panneau (131) est monté sur le support (121) et mis en œuvre sur le premier trou traversant (1211).

5. Dispositif de cuisson selon la revendication 4, dans lequel :
le support (121) est doté d'un premier rebord annulaire (1213) ;
le premier rebord annulaire (1213) est configuré pour entourer une périphérie extérieure du premier trou traversant (1211) et pour faire saillie depuis un côté du support (121) faisant face au panneau (131) ; et
le panneau (131) se trouve en butée contre le premier rebord annulaire (1213).

6. Dispositif de cuisson selon la revendication 5, dans lequel une largeur du premier rebord annulaire (1213) faisant saillie depuis le premier trou traversant (1211) va de 0,5 mm à 10 mm.

7. Dispositif de cuisson selon la revendication 4, dans lequel :
le support (121) est par ailleurs doté d'un deuxième trou traversant (1212) ;
le deuxième trou traversant (1212) est à l'opposé de la cavité de cuisson (111) et est espacé du premier trou traversant (1211) ;
le dispositif de cuisson (20) comporte par ailleurs une plaque d'observation (123) ; et
la plaque d'observation (123) est installée sur le support (121) et mise en œuvre sur le deuxième trou traversant (1212).

8. Dispositif de cuisson (20) selon la revendication 1, dans lequel le dispositif de cuisson (20) comporte par ailleurs une partie d'évacuation (200), et le canal d'évacuation de cuisson (201) et le premier canal de dissipation de chaleur (202) sont intégrés dans la partie d'évacuation (200).

9. Dispositif de cuisson (20) selon la revendication 1, dans lequel :
le couvercle réfléchissant (400) est situé dans la cavité d'installation (112) ; le couvercle réfléchissant (400) est mis en œuvre sur l'élément chauffant (132), et une ouverture du couvercle réfléchissant (400) est configurée pour faire face à la cavité de cuisson (111) ; et
le couvercle réfléchissant (400) est doté d'une partie saillante (1232) sur un côté faisant face à la cavité de cuisson (111), et la partie saillante (1232) est dotée d'un côté réfléchissant (1233) ; le côté réfléchissant (1233) est configuré pour faire face à la cavité de cuisson (111), et l'élément chauffant (132) est configuré pour entourer le côté réfléchissant (1233).

10. Dispositif de cuisson (20) selon la revendication 1, comportant par ailleurs :
un écran thermique (300) recouvrant l'élément chauffant (132) ; et
un ensemble d'isolation thermique (18),
dans lequel :
le moteur (14) est situé sur un côté de l'écran thermique (300) à distance de l'élément chauffant (132) ;
un arbre d'entraînement (141) du moteur (14) est configuré pour passer au travers de l'écran thermique (300) ; et
l'ensemble d'isolation thermique (18) est gainé sur une périphérie extérieure de l'arbre d'entraînement (141).

11. Dispositif de cuisson (20) selon la revendication 1, comportant par ailleurs :
une plaque formant couvercle (31) assemblée au corps de récipient (11) et dotée d'une partie d'observation (311) ;
une plaque d'observation (123) située entre la plaque formant couvercle (31) et la cavité de cuisson (111), dans lequel la partie d'observation (311) et la plaque d'observation (123) sont configurées pour définir un canal d'observation (312) le long d'une direction allant dans le sens de la hauteur (Y) du dispositif de cuisson (20) ; et
une partie d'isolation thermique (313) située entre la plaque formant couvercle (31) et la cavité de cuisson (111), dans lequel l'élément chauffant (132) est situé dans la partie d'isolation thermique (313) et à l'opposé de la cavité de cuisson (111), et la partie d'isolation thermique (313) est configurée pour séparer l'élément chauffant (132) du canal d'observation (312).

12. Dispositif de cuisson (20) selon la revendication 2, comportant par ailleurs un ensemble formant ventilateur (100) situé à l'intérieur de la cavité de cuisson (111), dans lequel :
l'ensemble formant ventilateur (100) est assemblé de manière amovible à un arbre d'entraînement (141) du moteur (14) ;
l'ensemble formant ventilateur (100) comporte la pale de ventilateur (126), un manchon de raccordement (25) et un élément de verrouillage (30) ;
la pale de ventilateur (126) comporte une pale (1261) et un élément d'installation (1262) raccordé à la pale (1261) ;
l'élément d'installation (1262) est doté axialement d'un trou d'arbre (1263) adapté pour recevoir l'arbre d'entraînement (141) du moteur (14) ;
l'élément d'installation (1262) est doté d'un trou traversant (1264) en communication avec le trou d'arbre (1263) dans une direction radiale ;
le manchon de raccordement (25) est gainé de manière mobile sur l'élément d'installation (1262) le long d'une direction axiale de l'élément d'installation (1262) ;
l'élément de verrouillage (30) est situé de manière mobile dans le trou traversant (1264) ;
le manchon de raccordement (25) est déplacé de manière sélective jusque sur une position de verrouillage ou une position de déverrouillage le long de la direction axiale de l'élément d'installation (1262) ;
lorsque l'arbre d'entraînement (141) est installé dans le trou d'arbre (1263), le manchon de raccordement (25) est configuré pour entraîner l'élément de verrouillage (30) à venir se mettre en butée contre l'arbre d'entraînement (141) pour se retrouver dans la position de verrouillage, et le manchon de raccordement (25) est configuré pour fournir à l'élément de verrouillage (30) une quantité de mouvement radial allant à l'opposé de l'arbre d'entraînement (141) pour se trouver dans la position de déverrouillage.

13. Dispositif de cuisson (20) selon la revendication 1, comportant par ailleurs :
un récipient intérieur (114) mis en œuvre dans la cavité de cuisson (111), dans lequel une profondeur du récipient intérieur (114) est h ;
dans lequel un corps principal (142) du moteur (14) est situé sur un côté du panneau (131) à distance de la cavité de cuisson (111), et un arbre d'entraînement (141) du moteur (14) est configuré pour passer au travers du panneau (131) ; et
un ensemble formant ventilateur (100) situé dans la cavité de cuisson (111) et assemblé de manière amovible sur l'arbre d'entraînement (141) du moteur (14),
dans lequel :
l'ensemble formant ventilateur (100) comporte une pale de ventilateur (126) ;
un diamètre de la pale de ventilateur (126) est d ; et
d et h satisfont à une relation : d/h≤2.
